# EUROPEAN PATENT SPECIFICATION

(11) **EP 2 814 886 B1**
(45) Date of publication and mention of the grant of the patent: **26.12.2018**
(21) Application number: 13715004.1
(22) Date of filing: 13.02.2013
(51) Int. Cl.: C08L 71/12, C08K 5/3492, C08L 53/02

(54) **STAIN AND COLOR CHANGE RESISTANT POLY(PHENYLENE ETHER) COMPOSITION**
FLECKEN- UND FARBWECHSELBESTÄNDIGE POLY(PHENYLENETHER)-ZUSAMMENSETZUNG
COMPOSITION DE POLY(PHÉNYLÈNE ÉTHER) RÉSISTANT AUX TACHES ET AU CHANGEMENT DE COULEUR

(30) Priority: 17.02.2012 US 201261600300 P; 07.02.2013 US 201313762039
(43) Date of publication of application: 24.12.2014
(73) Proprietor: SABIC Global Technologies B.V., 4612 PX Bergen op Zoom (NL)
(72) Inventor: SHAN, Wei, Shanghai 200063 (CN)
(74) Representative: Lang, Johannes
(86) International application number: PCT/IB2013/051178
(87) International publication number: WO 2013/121363

(56) References cited:
- WO-A2-2010/030478
- JP-A- H11 147 979
- US-A1- 2008 026 449
- US-A1- 2008 206 468

## Description

### BACKGROUND

Color is an important consideration in the design of products for the consumer electronics industry. Computers and computer accessories are sold in matching colors, so that the color of a computer casing typically matches the monitor casing and the accessory cable casings. Computers that are housed in casings that are light in color are preferred by some consumers, so there is a continuing motivation to design computer casings and accessories that will maintain their original color. The same is true for small electronic devices such as smart phones and the like that are handheld. Small devices are typically stored in pockets, purses, backpacks, or briefcases when not in use, frequently along with coinage. When contacted against coinage such as a United States copper penny, such light-colored devices may gradually and unevenly change in color (stain). Such a change in color is visually unappealing to consumers.

US 7,576,150 and 7,585,906 disclose composite materials of poly(phenylene ether) (PPE) and thermoplastic elastomer (TPE) that are light in color. These flexible PPE-TPE compositions contain benzotriazole-type UV absorbers and some types of hindered amine light stabilizers (HALS). They have balanced mechanical properties and good color stability after UV weathering and thus display promise for applications in wire insulation, cable jacket and plug/strain relief materials. However, the PPE-TPE compositions were found to gradually and unevenly change in color when contacted to a copper penny while being exposed to warm humid conditions (simulating typical storage conditions in pockets, purses, backpacks, or briefcases), giving an undesirably stained composite. WO 2010/030478 A2 discloses poly(arylene ether) compositions with improved UV light stability, wherein the UV stabilizers are pre-compounded with elastomer component of the composition. JP H 11147979 A refers to a flame retardant resin composition obtained by compounding a polypropylene resin, a polyphenylene ether resin, a hydrogenated block copolymer, ammonium polyphosphate, and a 1,3,5-triazine derivative in a specific weight ratio.

As a result, there is a need to develop PPE-TPE compositions that resist color change and staining during use in typical operation and storage environments.

### SUMMARY

The present invention is directed to compositions that do not change in color--that is, that remain substantially stainless or stain-free--when contacted with copper such as provided by a United States copper penny. Thus, the present invention is directed to a polymer composition, comprising:
(a) 10 to 45 weight percent of a poly(phenylene ether);
(b) 5 to 65 weight percent of a hydrogenated block copolymer of an alkenyl aromatic compound and a conjugated diene;
(c) 0 to 20 weight percent of a polybutene;
(d) 2 to 60 weight percent of a flame retardant;
(e) 0.1 to 20 weight percent of an anti-UV agent wherein the agent comprises a trisaryl-1,3,5-triazine;
(f) 0 to 50 weight percent of a copolymer of ethylene and a C₃-C₁₂ alpha-olefin; and
(g) 0 to 30 weight percent of a polyolefin homopolymer,
wherein the polymer composition does not contain a benzotriazole-type UV absorber, wherein all weight percents are based on the total weight of the composition, and
wherein an article made from the composition:
(i) is substantially stainless as defined in the present claims
(ii) exhibits a CIELAB color shift (ΔE) of 3 or less after 168 hours of heat exposure at 75 °C; and
(iii) exhibits a CIELAB color shift (ΔE) of 12 or less after 300 hours of xenon arc exposure according to ASTM D 4459.

### DETAILED DESCRIPTION

All ranges disclosed herein are inclusive of the endpoints, and the endpoints can be independently combined with each other. The use of the terms "a" and "an" and "the" and similar referents in the context of describing the invention (especially in the context of claims) are to be construed to cover both their singular and plural meanings, unless otherwise indicated herein or clearly contradicted by context. It should further be noted that the terms "first," "second," and the like herein do not denote any order, quantity, or importance, but rather are used to distinguish one element from another. The modifier "about" used in connection with a quantity is inclusive of the stated value and has the meaning dictated by the context (that is, it includes the degree of error associated with measurement of the particular quantity). Unless otherwise stated, as used herein weight percents are based on a 100 weight percent composition.

The term "stain-free" is used interchangeably with the term "stainless." For the purposes of this disclosure, staining is evaluated using the "Copper Penny Test." In the test, a United States copper penny is clamped on a sample of the composition of the present invention. The sample is placed in an oven at 60 °C with 90 percent relative humidity (RH) for 72 hours. The surface of the sample that is contacted with the penny is checked for staining. Staining is rated on a scale of 1 to 5 (1=no staining; 5=very remarkable stain). Suitable compositions of the present invention have a stain rating of 1 or 2, where a score of "1" means no stain and a score of "2" means "substantially stain-free" ("substantially stainless").

### Components

### Poly(phenylene ether)

The composition comprises a poly(phenylene ether). In some embodiments, the poly(phenylene ether) used to form the composition comprises repeating structural units of the formula: 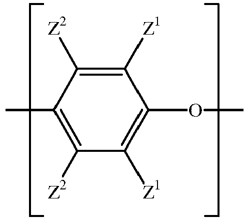 wherein for each structural unit, each Z¹ is independently halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms.

As used herein, the term "hydrocarbyl," whether used by itself or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as "substituted," it can contain heteroatoms over and above the carbon and hydrogen members of the substituent residue. Thus, when specifically described as substituted, the hydrocarbyl residue can also contain halogen atoms, nitro groups, cyano groups, carbonyl groups, carboxylic acid groups, ester groups, amino groups, amide groups, sulfonyl groups, sulfoxyl groups, sulfonamide groups, sulfamoyl groups, hydroxyl groups, alkoxyl groups, or the like, and it can contain heteroatoms within the backbone of the hydrocarbyl residue.

The poly(phenylene ether) can comprise molecules having aminoalkyl-containing end group(s), typically located in an ortho position to the hydroxy group. Also frequently present are tetramethyldiphenoquinone (TMDQ) end groups, typically obtained from reaction mixtures in which tetramethyldiphenoquinone by-product is present. In some embodiments the poly(phenylene ether) comprises TMDQ end groups in an amount of less than 5 weight percent, specifically less than 3 weight percent, more specifically less than 1 weight percent, based on the weight of the poly(phenylene ether). In some embodiments, the poly(phenylene ether) comprises, on average, about 0.7 to about 2 moles, specifically about 1 to about 1.5 moles, of chain-terminal hydroxyl groups per mole of poly(phenylene ether).

The poly(phenylene ether) can be in the form of a homopolymer, a copolymer, a graft copolymer, an ionomer, or a block copolymer, as well as combinations comprising at least one of the foregoing. Poly(phenylene ether) includes polyphenylene ether comprising 2,6-dimethyl-1,4-phenylene ether units optionally in combination with 2,3,6-trimethyl-1,4-phenylene ether units. In some embodiments, the poly(phenylene ether) is an unfunctionalized poly(phenylene ether). An unfunctionalized poly(phenylene ether) is a poly(phenylene ether) consisting of the polymerization product of one or more phenols. The term "unfunctionalized poly(phenylene ether)" excludes functionalized poly(phenylene ether)s such as acid-functionalized poly(phenylene ether)s and anhydride-functionalized poly(phenylene ether)s. In some embodiments, the poly(phenylene ether) comprises a poly(2,6-dimethyl-1,4-phenylene ether).

The poly(phenylene ether) can be prepared by the oxidative coupling of monohydroxyaromatic compound(s) such as 2,6-xylenol and/or 2,3,6-trimethylphenol. Catalyst systems are generally employed for such coupling. They can contain heavy metal compounds such as copper, manganese, or cobalt compounds, usually in combination with one or more ligands such as a primary amine, a secondary amine, a tertiary amine, a halide, or a combination of two or more of the foregoing.

In some embodiments, the poly(phenylene ether) has an intrinsic viscosity of about 0.2 to about 1.0 deciliter per gram, as measured by Ubbelohde viscometer in chloroform at 25°C. In some embodiments, the poly(phenylene ether) has an intrinsic viscosity of about 0.3 to about 0.6 deciliter per gram. When the poly(phenylene ether) is a poly(2,6-dimethyl-1,4-phenylene ether), the intrinsic viscosity range of about 0.3 to about 0.6 deciliter per gram can correspond to a number average molecular weight range of about 16,000 to about 25,000 atomic mass units.

In some embodiments, the composition comprises less than or equal to 20 weight percent, specifically less than or equal to 8 weight percent, more specifically less than or equal to 2 weight percent, 1 weight percent, or less than or equal to 0.5 weight percent, of a poly(phenylene ether)-polysiloxane block copolymer. In some embodiments, the composition excludes poly(phenylene ether)-polysiloxane block copolymer. Poly(phenylene ether)-polysiloxane block copolymers, which comprise at least one poly(phenylene ether) block and at least one polysiloxane block, are described, for example, in U.S. Patent Number 7,847,032 (Guo et al.).

In some embodiments, the poly(phenylene ether) is essentially free of incorporated diphenoquinone residues. "Diphenoquinone residues" means the dimerized moiety that may form in the oxidative polymerization reaction giving rise to the poly(arylene ethers) contemplated for use in the present invention. As described in U.S. Patent No. 3,306,874 (Hay), synthesis of poly(arylene ethers) by oxidative polymerization of monohydric phenols yields not only the desired poly(phenylene ether) but also a diphenoquinone side product. For example, when the monohydric phenol is 2,6-dimethylphenol, 3,3',5,5'-tetramethyldiphenoquinone (TMDQ) is generated. Typically, the diphenoquinone is "re-equilibrated" into the poly(phenylene ether) (i.e., the diphenoquinone is incorporated into the poly(phenylene ether) structure) by heating the polymerization reaction mixture to yield a poly(phenylene ether) comprising terminal or internal diphenoquinone residues. As used herein, "essentially free" means that fewer than 1 weight percent of poly(phenylene ether) molecules comprise the residue of a diphenoquinone as measured by nuclear magnetic resonance spectroscopy (NMR) (Mole of TMDQ x Molecular Weight of unit TMDQ)/(Mole of Polymer x Number Average Molecular Weight (Mn)). In some embodiments, fewer than 0.5 weight percent of poly(phenylene ether) molecules comprise the residue of a diphenoquinone.

For example, as shown in the following Scheme, when a poly(phenylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(phenylene ether) with terminal and internal residues of incorporated diphenoquinone.

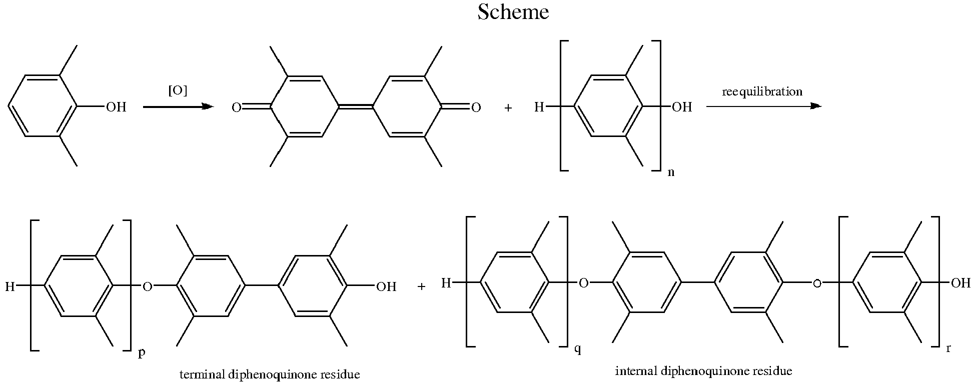

However, such re-equilibration reduces the molecular weight of the poly(phenylene ether) (e.g., p and q+r are less than n). Accordingly, when a higher molecular weight and stable molecular weight poly(phenylene ether) is desired, it may be desirable to separate the diphenoquinone from the poly(phenylene ether) rather than re-equilibrating the diphenoquinone into the poly(phenylene ether) chains. Such a separation can be achieved, for example, by precipitation of the poly(phenylene ether) in a solvent or solvent mixture in which the poly(phenylene ether) is insoluble and the diphenoquinone is soluble with very minimum time between end of reaction and precipitation.

For example, when a poly(phenylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with about 1 to about 4 volumes of methanol or methanol water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the re-equilibration of the diphenoquinone into the poly(phenylene ether) chain can be minimized (e.g., by isolating the poly(phenylene ether) no more than 200 minutes after termination of oxidative polymerization). These approaches are described in United States Patent Number 8,025,158, by Delsman and Schoenmakers. Alternatively, diphenoquinone amounts can be achieved by removing the TMDQ formed during polymerization by filtration, specifically after stopping the oxygen feed into the polymerization reactor.

In some embodiments, the poly(phenylene ether) is a poly (2,6-dimethyl-1,4-phenylene ether) having an intrinsic viscosity of 0.3 to 0.6 deciliter per gram measured in chloroform at 25 °C. In some embodiments, the composition comprises about 10 to about 45 weight percent of a poly(phenylene ether). In some embodiments, the composition comprises about 15 to about 35 weight percent of a poly(phenylene ether). In other embodiments, the composition comprises about 15 to about 30 weight percent of a poly(phenylene ether).

In these and other embodiments, the poly(phenylene ether) is a poly(2,6-dimethyl-1,4-phenylene ether). In a further embodiment, the poly(2,6-dimethyl-1,4-phenylene ether). In a further embodiment, the poly(phenylene ether) is a poly(2,6-dimethyl-1,4-phenylene ether) having an intrinsic viscosity of 0.3 to 0.6 deciliter per gram measured in chloroform at 25 °C.

### Hydrogenated Block Copolymer

In addition to the poly(phenylene ether), the composition further comprises one or more hydrogenated block copolymers of an alkenyl aromatic compound and a conjugated diene. For conciseness, this component is referred to herein as the "hydrogenated block copolymer."

The hydrogenated block copolymer may comprise about 10 to about 90 weight percent of poly(alkenyl aromatic) content and about 90 to about 10 weight percent of poly(conjugated diene) content. In some embodiments, the poly(alkenyl aromatic) content is about 10 to 45 weight percent, specifically about 20 to about 40 weight percent. In other embodiments, the poly(alkenyl aromatic) content is greater than 45 weight percent to about 90 weight percent, specifically about 55 to about 80 weight percent. The hydrogenated block copolymer can have a weight average molecular weight of about 40,000 to about 400,000 atomic mass units. As for the poly(phenylene ether) component described above, the number average molecular weight and the weight average molecular weight may be determined by gel permeation chromatography and based on comparison to polystyrene standards. In some embodiments, the hydrogenated block copolymer has a weight average molecular weight of 200,000 to about 400,000 atomic mass units, specifically 220,000 to about 350,000 atomic mass units. In other embodiments, the hydrogenated block copolymer can have a weight average molecular weight of about 40,000 to less than 200,000 atomic mass units, specifically about 40,000 to about 180,000 atomic mass units, more specifically about 40,000 to about 150,000 atomic mass units.

The alkenyl aromatic monomer used to prepare the hydrogenated block copolymer can have the structure: 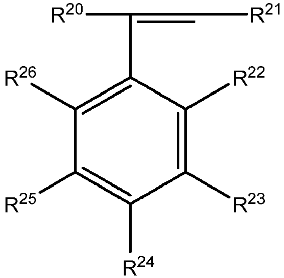 wherein R²⁰ and R²¹ each independently represent a hydrogen atom, a C₁-C₈-alkyl group, or a C₂-C₈-alkenyl group; R²² and R²⁶ each independently represent a hydrogen atom, a C₁-C₈-alkyl group, a chlorine atom, or a bromine atom; and R²³, R²⁴, and R²⁵ each independently represent a hydrogen atom, a C₁-C₈-alkyl group, or a C₂-C₈-alkenyl group, or R²³ and R²⁴ are taken together with the central aromatic ring to form a naphthyl group, or R²⁴ and R²⁵ are taken together with the carbons to which they are attached to form a naphthyl group. Specific alkenyl aromatic monomers include, for example, styrene, chlorostyrenes such as p-chlorostyrene, and methylstyrenes such as alpha-methylstyrene and p-methylstyrene. In some embodiments, the alkenyl aromatic monomer is styrene.

The conjugated diene used to prepare the hydrogenated block copolymer can be a C₄-C₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene consists of 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, specifically at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a B block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of A and B, wherein the molecular weight of each A block may be the same as or different from that of other A blocks, and the molecular weight of each B block may be the same as or different from that of other B blocks. In some embodiments, the hydrogenated block copolymer is a diblock copolymer, a triblock copolymer, or a combination thereof.

In some embodiments, the hydrogenated block copolymer is a polystyrene-poly(ethylene-butylene)-polystyrene triblock copolymer. In some embodiments, the block copolymer is a polystyrene-poly(ethylene-propylene) diblock copolymer. These hydrogenated block copolymers do not include the residue of any functionalizing agents or any monomers other than those indicated by their names.

In some embodiments, the hydrogenated block copolymer excludes the residue of monomers other than the alkenyl aromatic compound and the conjugated diene. In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms.

In some embodiments, the block copolymer includes the residue of one or more acid functionalizing agents, such as maleic anhydride.

Methods for preparing hydrogenated block copolymers are known in the art and many hydrogenated block copolymers are commercially available. Illustrative commercially available block copolymers include the polystyrene-poly(ethylene-propylene) diblock copolymers available from Kraton Performance Polymers, Inc. as Kraton™ G1701 and G1702; the polystyrene-poly(ethylene-butylene)-polystyrene triblock copolymers available from Kraton Performance Polymers, Inc. as Kraton™ G1641, G1650, G1651, G1654, G1657, G1726, G4609, G4610, GRP-6598, RP6924, A1636, MD6932M, MD6933, and MD6939; the polystyrene-poly(ethylene-butylene-styrene)-polystyrene (S-EB/S-S) triblock copolymers available from Kraton Polymers as Kraton™ A1535 and A1536; the polystyrene-poly(ethylene-propylene)-polystyrene triblock copolymers available from Kraton Performance Polymers, Inc. as Kraton™ G1730, A1635HU and A1636HU; the maleic anhydride-grafted polystyrene-poly(ethylene-butylene)-polystyrene triblock copolymers available from Kraton Performance Polymers, Inc. as Kraton™ FG1901, FG1924, and MD-6684; the maleic anhydride-grafted polystyrene-poly(ethylene-butylene-styrene)-polystyrene triblock copolymer available from Kraton Performance Polymers, Inc. as Kraton™ MD6670; the polystyrene-poly(ethylene-butylene)-polystyrene triblock copolymer comprising 67 weight percent polystyrene available from AK Elastomer as TUFTEC™ H1043; the polystyrene-poly(ethylene-butylene)-polystyrene triblock copolymer comprising 42 weight percent polystyrene available from AK Elastomer as TUFTEC™ H1051; the polystyrene-poly(butadiene-butylene)-polystyrene triblock copolymers available from AK Elastomer as TUFTEC™ P1000 and P2000; the polystyrene-polybutadiene-poly(styrene-butadiene)-polybutadiene block copolymer available from AK Elastomer as S.O.E.-SS L601; the radial block copolymers available from Chevron Phillips Chemical Company as K-Resin™ KK38, KR01, KR03, and KR05; the polystyrene-poly(ethylene-butylene)-polystyrene triblock copolymer comprising about 60 weight polystyrene available from Kuraray as SEPTON™ S8104; the polystyrene-poly(ethylene-ethylene/propylene)-polystyrene triblock copolymers available from Kuraray as SEPTON™ S4044, S4055, S4077, and S4099; and the polystyrene-poly(ethylene-propylene)-polystyrene triblock copolymer comprising about 65 weight percent polystyrene available from Kuraray as SEPTON™ S2104. Mixtures of two of more block copolymers may be used.

In some embodiments, at least a portion of the hydrogenated block copolymer is provided in the form of a melt-kneaded blend comprising hydrogenated block copolymer, an ethylene-propylene copolymer, and mineral oil, such as, for instance TPE-SB2400, from Sumitomo. In this context, the term "melt-kneaded blend" means that the hydrogenated block copolymer, the ethylene-propylene copolymer, and the mineral oil are melt-kneaded with each other before being melt-kneaded with other components. The ethylene-propylene copolymer in this melt-kneaded blend is an elastomeric copolymer (that is, a so-called ethylene-propylene rubber (EPR)). Suitable ethylene-propylene copolymers are described below in the context of the optional ethylene/alpha-olefin copolymer. In these blends, the hydrogenated block copolymer amount may be about 20 to about 60 weight percent, specifically about 30 to about 50 weight percent; the ethylene-propylene copolymer amount may be about 2 to about 20 weight percent, specifically about 5 to about 15 weight percent; and the mineral oil amount may be about 30 to about 70 weight percent, specifically about 40 to about 60 weight percent; wherein all weight percents are based on the total weight of the melt-kneaded blend.

In some embodiments, the composition comprises about 5 to about 65 total weight percent of one or more hydrogenated block copolymers, based on the total weight of the composition, preferably about 30 to about 50 weight percent and more preferably about 30 to about 45 weight percent.. Within this range, the hydrogenated block copolymer amount specifically may be about 5 to about 50 weight percent based on the total weight of the composition. In an alternate embodiment, the composition comprises about 5 to 30 weight percent of a hydrogenated block copolymer of an alkenyl aromatic compound and a conjugated diene.

In some embodiments, the composition comprises a mixture of a linear triblock polystyrene-poly(ethylene-butylene)-polystyrene copolymer Kraton™ A1536 from Kraton Polymers and a melt-kneaded blend such as TPE-SB2400 from Sumitomo Chemical Co. in about a 30 to about 45 weight percent based on the total weight of the composition. Within this range, the hydrogenated block copolymer amount specifically may be about 30 to about 40 weight percent based on the total weight of the composition.

In another embodiment, the composition comprises a linear triblock polystyrene-poly(ethylene-butylene)-polystyrene copolymer such as Kraton™ G1650 from Kraton Performance Polymers in about 5 to 30 weight percent based on the total weight of the composition. In another embodiment, the composition comprises Kraton™ G1650 from Kraton Performance Polymers in about 5 to 15 weight percent based on the total weight of the composition.

In another embodiment, the composition comprises a mixture of a linear triblock polystyrene-poly(ethylene-butylene)-polystyrene copolymer Kraton™ A1536 from Kraton Polymers and a and a melt-kneaded blend such as TPE-SB2400 from Sumitomo Chemical Co. in about 30 to about 45 weight percent based on the total weight of the composition. Within this range, the amount of hydrogenated block copolymer may be about 30 to about 40 weight percent based on the total weight of the composition, wherein the weight percent of Kraton™ A1536 exceeds the weight percent of TPE-SB2400. In a further embodiment, the amount of A1536 may be about 15 to about 25 weight percent based on the total weight of the composition and the amount of TPE-SB2400 may be about 10 to about 20 weight percent based on the total weight of the composition. In a further embodiment, the amount of A1536 may be about 18 to about 22 weight percent based on the total weight of the composition and the amount of TPE-SB2400 may be about 13 to about 17 weight percent based on the total weight of the composition.

### Polybutene

The composition of the present invention optionally further comprises a polybutene. As used herein, the term "polybutene" refers to a polymer comprising greater than 75 weight percent of units, specifically greater than 80 weight percent of units, derived from 1 butene, 2-butene, 2-methylpropene (isobutene), or a combination thereof. The polybutene may be a homopolymer (as described below) or a copolymer. In some embodiments, the polybutene consists of units derived from 1-butene, 2-butene, 2-methylpropene (isobutene), or a combination thereof. In other embodiments, the polybutene is a copolymer that comprises 1 to less than 25 weight percent of a copolymerizable monomer such as ethylene, propylene, or 1-octene.

In one embodiment, the polybutene is a homopolymer.

In another embodiment, the polymer is a copolymer of isobutylene and 1-butene or 2-butene.

In another embodiment, the polybutene is a mixture comprising polybutene homopolymer and polybutene copolymer.

In another embodiment, the composition of the present invention comprises about 0 to about 20 weight percent of a polybutene based on the total weight of the composition and preferably about 5 to about 10 weight percent of a polybutene based on the total weight of the composition.

In another embodiment, the polybutene is a copolymer wherein the isobutylene derived units are from 40 to 99 weight percent of the copolymer, the 1-butene derived units are from 2 to 40 weight percent of the copolymer, and the 2-butene derived units are from 0 to 30 weight percent of the copolymer. In yet another embodiment, the polybutene is a terpolymer of the three units, wherein the isobutylene derived units are from 40 to 96 weight percent of the copolymer, the 1-butene derived units are from 2 to 40 weight percent of the copolymer, and the 2-butene derived units are from 2 to 20 weight percent of the copolymer. In yet another embodiment, the polybutene is a copolymer of isobutylene and 1-butene, wherein the isobutylene derived units are from 65 to 100 weight percent of the homopolymer or copolymer, and the 1-butene derived units are from 0 to 35 weight percent of the copolymer.

In another embodiment, the polybutene is a copolymer that comprises 1 to less than 25 weight percent of a copolymerizable monomer such as ethylene, propylene, or 1-octene. In some embodiments, the polybutene has a number average molecular weight of about 700 to about 1,000 atomic mass units. Suitable polybutenes include, for example, the isobutene-butene copolymer having a number average molecular weight of about 800 atomic mass units such as Indopol™ H50.

In another embodiment, the composition comprises a liquid polybutene. The liquid polybutene is a polyisobutene having a number average molecular weight of about 800 AMU. In a further embodiment, the polybutene is a polybutene such as Indopol™ H50 from INEOS Oligomers. In a further embodiment, the composition comprises about 2 to about 20 weight percent of Indopol™ H50 and preferably, about 3 to about 18 weight percent of Indopol™ H50, and more preferably about 2 to about 10 weight percent of Indopol™ H50 based on the total weight of the composition.

### Flame Retardant

In addition to the poly(phenylene ether), hydrogenated block copolymer, and polybutene, the composition comprises about 2 to about 60 weight percent, and more specifically about 5 to about 50 weight percent of one or more flame retardants based on the total weight of the composition. There is no particular restriction on the types of flame retardants that may be used except that the flame retardant is suitably stable at the elevated temperatures employed during processing. Exemplary flame retardants include melamine (CAS Reg. No. 108-78-1), melamine cyanurate (CAS Reg. No. 37640-57-6), melamine phosphate (CAS Reg. No. 20208-95-1), melamine pyrophosphate (CAS Reg. No. 15541-60-3), melamine polyphosphate (CAS Reg. No. 218768-84-4), melam, melem, melon, zinc borate, polyphosphazine, (CAS Reg. No. 1332-07-6), boron phosphate, red phosphorous (CAS Reg. No. 7723-14-0), organophosphate esters, monoammonium phosphate (CAS Reg. No. 7722-76-1), diammonium phosphate (CAS Reg. No. 7783-28-0), alkyl phosphonates (CAS Reg. No. 78-38-6 and 78-40-0), metal dialkyl phosphinate, ammonium polyphosphates (CAS Reg. No. 68333-79-9), low melting glasses and combinations of two or more of the foregoing flame retardants.

Exemplary organophosphate ester flame retardants include, but are not limited to, phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In one embodiment, the organophosphate ester is selected from tris(alkylphenyl) phosphate (for example, CAS Reg. No. 89492-23-9 or CAS Reg. No. 78-33-1), resorcinol bis(diphenyl phosphate) (for example, CAS Reg. No. 57583-54-7), bisphenol A bis(diphenyl phosphate) (for example, CAS Reg. No. 181028-79-5), triphenyl phosphate (for example, CAS Reg. No. 115-86-6), tris(isopropylphenyl) phosphate (for example, CAS Reg. No. 68937-41-7), triphenyl phosphate (CAS Reg. No. 115-86-6) and mixtures of two or more of the foregoing organophosphate esters.

In some embodiments, the flame retardant comprises one or more of a phosphoric acid salt, a metal dialkyl phosphinate, a nitrogen-containing flame retardant, a metal hydroxide, and a triaryl phosphate. The flame retardant composition has the advantage of providing excellent flame retardance at lower levels of organic phosphate than organic phosphate alone, thus decreasing or eliminating plate-out and migration in thermoplastic compositions.

In some embodiments, the flame retardant additive composition consists essentially of (A) a phosphoric acid salt such as melamine phosphate, melamine pyrophosphate, melamine orthophosphate, melamine polyphosphate, diammonium phosphate, monoammonium phosphate, phosphoric acid amide, ammonium polyphosphate, polyphosphoric acid amide, and combinations of two or more of the foregoing; (B) a metal hydroxide; and (C) an organic phosphate. "Consisting essentially of' as used herein allows the inclusion of additional components as long as those additional components do not materially affect the basic and novel characteristics of the flame retardant additive, such as the ability to provide the same or greater level of flame retardance to a thermoplastic composition at lower levels of organic phosphate than organic phosphate alone and/or being essentially free (containing less than 0.05 weight percent, or, more specifically less than 0.005 weight percent, based on the combined weight of phosphoric acid salt, metal hydroxide and organic phosphate) of chlorine and bromine.

In another embodiment, the flame retardant additive composition consists of (A) a phosphoric acid salt selected from the group consisting of melamine phosphate, melamine pyrophosphate, melamine orthophosphate, melem polyphosphate, melam polyphosphate, diammonium phosphate, monoammonium phosphate, phosphoric acid amide, melamine polyphosphate, ammonium polyphosphate, polyphosphoric acid amide, and combinations of two or more of the foregoing; (B) a metal hydroxide; and (C) an organic phosphate.

In some embodiments, the composition comprises about 2 to about 60 weight percent of total flame retardant based on the total weight of the composition. Within this range, the total flame retardant amount specifically may be about 15 to about 40 weight percent based on the total weight of the composition.

### Phosphordic Acid Salts

In some embodiments, the flame retardant comprises one or more phosphoric acid salts.

As mentioned above, the phosphoric acid salt can be selected from the group consisting of melamine phosphate (for example, CAS Reg. No. 20208-95-1), melamine pyrophosphate (for example, CAS Reg. No. 15541-60-3), melem polyphosphate, melam polyphosphate, melamine orthophosphate (for example, CAS Reg. No. 20208-95-1), monoammonium phosphate (for example, CAS Reg. No. 7722-76-1), diammonium phosphate (for example, CAS Reg. No. 7783-28-0), phosphoric acid amide (for example, CAS Reg. No. 680-31-9), melamine polyphosphate (for example, CAS Reg. No. 218768-84-4 or 56386-64-2), ammonium polyphosphate (for example, CAS Reg. No. 68333-79-9), polyphosphoric acid amide and combinations of two or more of the foregoing phosphoric acid salts. The phosphoric acid salt can be surface coated with one or more of compounds selected from melamine monomer, melamine resin, modified melamine resin, guanamine resin, epoxy resin, phenol resin, urethane resin, urea resin, silicone resin, and the like. The identity of the surface coating, when present, is typically chosen based upon the identity of the thermoplastic components of the flame retardant thermoplastic composition. In some embodiments the phosphoric acid salt comprises melamine polyphosphate. In some embodiments the phosphoric acid salt comprises a combination of melamine polyphosphate and melamine phosphate.

Phosphoric acid salts are commercially available or can be synthesized by the reaction of a phosphoric acid with the corresponding amine containing compound as is taught in the art.

### Metal Hydroxides

In some embodiments, the flame retardant comprises one or more metal hydroxides. Suitable metal hydroxides include all those capable of providing fire retardance, as well as combinations thereof. The metal hydroxide can be chosen to have substantially no decomposition during processing of the fire additive composition and/or flame retardant thermoplastic composition. Substantially no decomposition is defined herein as amounts of decomposition that do not prevent the flame retardant additive composition from providing the desired level of fire retardance. Exemplary metal hydroxides include, but are not limited to, magnesium hydroxide (for example, CAS Reg. No. 1309-42-8), aluminum hydroxide (for example, CAS Reg. No. 21645-51-2), cobalt hydroxide (for example. CAS Reg. No. 21041-93-0) and combinations of two or more of the foregoing. In some embodiments, the metal hydroxide comprises magnesium hydroxide. In some embodiments the metal hydroxide has an average particle size less than or equal to 10 micrometers and/or a purity greater than or equal to 90 weight percent. In some embodiments, it is desirable for the metal hydroxide to contain substantially no water, i.e. a weight loss of less than 1 weight percent upon drying at 120° C. for 1 hour. In some embodiments the metal hydroxide can be coated, for example, with stearic acid or other fatty acids. In other embodiments, the metal hydroxide is coated with an aminosilane.

### Organic Phosphates

In some embodiments, the flame retardant comprises one or more organic phosphate. The organic phosphate can be an aromatic phosphate compound of the formula: 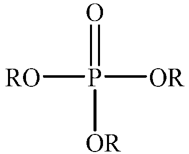 where each R is independently an alkyl, cycloalkyl, aryl, alkyl substituted aryl, halogen substituted aryl, aryl substituted alkyl, halogen, or a combination of any of the foregoing, provided at least one R is aryl or alkyl substituted aryl. Examples include phenyl bisdodecyl phosphate, phenylbisneopentyl phosphate, phenyl-bis(3,5,5'-tri-methyl-hexyl phosphate), ethyldiphenyl phosphate, 2-ethyl-hexyldi(p-tolyl)phosphate, bis-(2-ethylhexyl)p-tolylphosphate, tritolyl phosphate, bis-(2-ethylhexyl)phenyl phosphate, tri-(nonylphenyl)phosphate, di (dodecyl)p-tolyl phosphate, tricresyl phosphate, triphenyl phosphate, dibutylphenyl phosphate, 2-chloroethyldiphenyl phosphate, p-tolyl bis(2,5,5'-trimethylhexyl)phosphate, 2-ethylhexyldiphenyl phosphate, and the like. In some embodiments the phosphate is one in which each R is aryl and/or alkyl substituted aryl, such as triphenyl phosphate and tris(alkyl phenyl)phosphate.

Alternatively, the organic phosphate can be a di- or polyfunctional compound or polymer having one of the following formulas: 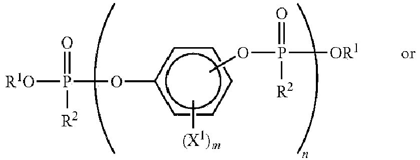 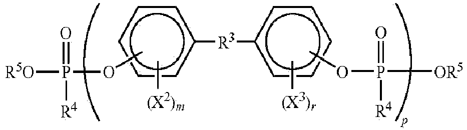 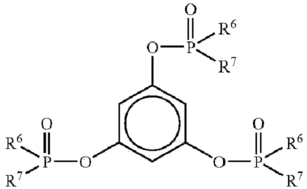 including mixtures thereof, in which R¹, R³ and R⁵ are, independently, hydrocarbon; R², R⁴, R⁶ and R⁷ are, independently, hydrocarbon or hydrocarbonoxy; X¹, X² and X³ are, independently, halogen; m and r are 0 or integers from 1 to 4, and n and p are from 1 to 30.

Examples include the bis(diphenyl phosphate)s of resorcinol, hydroquinone and bisphenol A, respectively, or their polymeric counterparts. Methods for the preparation of the aforementioned di- and polyfunctional aromatic phosphates are described in British Patent No. 2,043,083.

Exemplary organic phosphates include, but are not limited to, phosphates containing substituted phenyl groups, phosphates based upon resorcinol such as, for example, resorcinol bis(diphenyl phosphate), as well as those based upon bisphenols such as, for example, bisphenol A bis(diphenyl phosphate). In some embodiments, the organic phosphate is selected from tris(butyl phenyl)phosphate (for example, CAS Reg. No. 89492-23-9, and 78-33-1), resorcinol bis(diphenyl phosphate) (for example, CAS Reg. No. 57583-54-7), bisphenol A bis(diphenyl phosphate) (for example, CAS Reg. No. 181028-79-5), triphenyl phosphate (for example, CAS Reg. No. 115-86-6), tris(isopropyl phenyl)phosphate (for example, CAS Reg. No. 68937-41-7) and mixtures of two or more of the foregoing.

### Phosphinate and Phosphonate Salts

In some embodiments, the flame retardant comprises one or more metal salts of phosphinates and phosphonates (so-called "metallophophorous" flame retardants). The metal component of the metal phosphinate or phosphonate salt can be a cation of Mg, Ca, Al, Sb, Sn, Ge, Ti, Zn, Fe, Zr, Ce, Bi, Sr, Mn, Li, Na, or K. The phosphinate or phosphonate component can be dimethylphosphinate, diethylphosphinate, di-n-propylphosphinate, di-n-butylphosphinate, di-n-hexylphosphinate, dicyclohexylphosphinate, di-2-ethylhexylphosphinate, diphenylphosphinate, di-o-tolylphosphinate, dimethylphosphonate, diethylphosphonate, di-n-propylphosphonate, di-n-butylphosphonate, di-n-hexylphosphonate, dicyclohexylphosphonate, di-2-ethylhexylphoshate, diphenylphosphonate, di-o-tolylphosphonate, dimethylphosphate, diethylphosphate, di-n-propylphosphate, di-n-butylphosphate, di-n-hexylphosphate, dicyclohexylphosphate, di-2-ethylhexylphoshate, diphenylphosphate, di-o-tolylphosphate, and the like, and mixtures thereof. A preferred metallophosphorus flame retardant is aluminum tris (diethylphosphinate). Preparation of metallophosphorus flame retardants is described, for example, in U.S. Pat. Nos. 6,255,371 and 6,547,992 to Schlosser et al., and 6,355,832 and 6,534,673 to Weferling et al.

Some of the above described components of the flame retardant additive composition are in liquid form at room temperature (25° C) and some are solid.

### Anti-Ultraviolet Radiation Agent

In addition to the poly(phenylene ether), hydrogenated block copolymer, polybutene, and flame retardant, the composition further comprises an agent that protects the composition from UV degradation, referred to herein as an "anti-UV agent." The compositions of the present invention do not contain benzotriazole-type UV absorbers as the anti-UV agent, which are compounds with a benzotriazole core ( 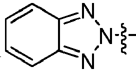 ), such as those shown below.

| Structure | Name |
|---|---|
| 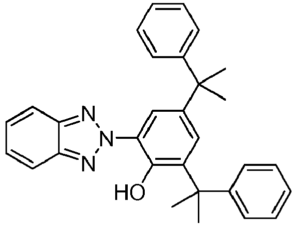 | 2-(2H-benzotriazol-2-yl)-4,6-bis(1-methyl-1-phenylethyl)phenol |
| | CAS Reg. No. 70321-86-7 |
| | Tinuvin™ 234 |
| 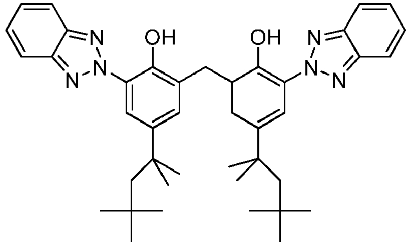 | 2,2'-Methylene bis(6-(2H-benzotriazol-2-yl)-4-,1,1,3,3,tetramethylbutyl)phenol) |
| | CAS Reg. No. 103597-45-1 |
| | Chiguard™ 5431 |

In one embodiment, the anti-UV agent used in the compositions of the present invention comprises a trisaryl-1,3,5-triazinyl UV absorber having a triazine core ( 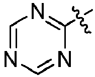 ), as in the following compounds.

| Structure | Name |
|---|---|
| 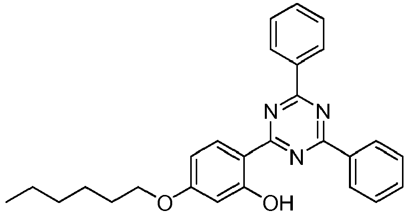 | 2-(4,6-Diphenyl-1,3,5-triazin-2-yl)-5-hexyloxy-phenol |
| | CAS Reg. No. 147315-50-2 |
| | Tinuvin™ 1577 |
| 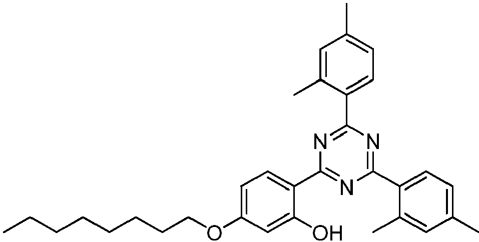 | 2-[4,6-Bis(2,4-dimethylphenyl)-1,3,5-triazin-2-yl]-5-(octyloxy)phenol |
| | CAS Reg. No. 2725-22-6 |
| | Chiguard™ 1064 |

In one embodiment, the anti-UV agent used is a cycloaliphatic epoxy. Cycloaliphatic epoxy compounds that are UV-stabilizers also include, for example, cyclopentene oxide, cyclohexene oxide, 4-vinylcyclohexene oxide, 4-vinylcyclohexene dioxide, 3,4-epoxycyclohexylmethyl 3',4'-epoxycyclohexylcarboxylate (CAS Reg. No. 2386-87-0), 4-alkoxymethylcyclohexene oxides, acyloxymethylcyclohexene oxides, 1,3-bis(2-(3,4-epoxycyclohexyl)ethyl)-1,1,3,3-tetramethydisiloxane, 2-epoxy-1,2,3,4-tetrahydronaphthalene, and the like.

In another embodiment, the anti-UV agent used in the compositions of the present invention comprises the hindered amine light stabilizer (HALS) poly(4-hydroxy-2,2,6,6-tetramethyl-1-piperidine ethanol-alt-1,4-butanedioic acid), the structure of which is shown below, along with several other HALS stabilizers.

| Structure | Name |
|---|---|
| 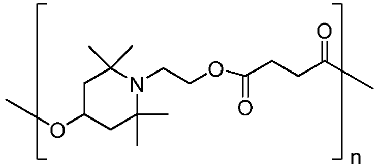 | 4-Hydroxy-2,2,6,6-tetramethyl-1-piperidinethanol-dimethyl succinate copolymer |
| | Also known as poly(4-hydroxy-2,2,6,6-tetramethyl-1-pipeddine ethanol-alt-1,4-butanedioic acid) |
| | CAS Reg. No. 103597-45-1 |
| | Tinuvin™ 622LD, Chiguard™ 622LD |
| 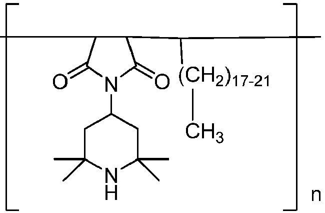 | Poly-{3-(eicosyltetracosyl)-1-[2,2,6,6-tetramethylpiperidin-4-yl]-pyrrolidine-2,5-dione} |
| | CAS Reg. No. 152261-33-1 |
| | Uvinul™ 5050H |
| 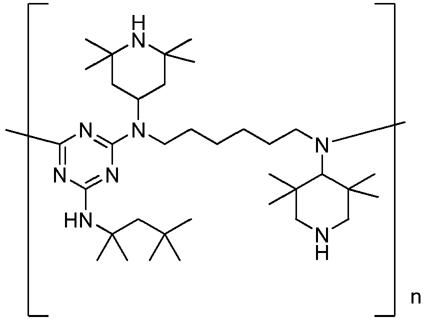 | Poly-{[6-[(1,1,3,3-tetramethylbutyl)amino]-1,3,5-triazine-2,4-diyl] |
| | CAS Reg. No. 71878-19-8, 70624-18-9 |
| | Chimassorb™ 944 |
| 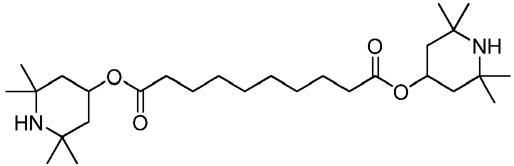 | Bis (2,2,6,6,-tetramethyl-4-piperidyl) sebacate |
| | CAS Reg. No. 52829-07-09 |
| | Tinuvin™ 770 |

In one embodiment, the anti-UV agent comprises a trisaryl-1,3,5-triazinyl UV absorber, which is selected from 2-(4,6-diphenyl-1,3,5-triazin-2-yl)-5-hexyloxy-phenol and 2-[4,6-bis(2,4-dimethyl-phenyl)-1,3,5-triazin-2-yl]-5-(octyloxy)phenol, or a combination thereof.

In another embodiment, the anti-UV agent further comprises an agent selected from several classes of ultraviolet radiation stabilizers, including benzophenone-type UV absorbers (including 2-hydroxybenzophenones and hydroxyphenylbenzophenones), hindered amine light stabilizers, cinnamate-type UV absorbers, oxanilide-type UV absorbers, benzoxazinone-type UV absorbers, cycloaliphatic epoxy compounds, phosphite compounds, and the like. Additional classes of ultraviolet radiation stabilizers are described in H. Zweifel, Ed., "Plastics Additive Handbook", 5th Edition, Cincinnati: Hanser Gardner Publications, Inc. (2001), pages 206-238.

In another embodiment, the compositions provided herein contain about 0.1 to 20 weight percent of a 1,3,5-triaryl triazine-type UV absorber based on the total weight of the composition, provided that the composition does not contain a benzotriazole-type UV absorber. In some embodiments, the compositions contain about 1 to about 10 weight percent of a 1,3,5-triaryl triazine-type UV absorber which is 2-(4,6-diphenyl-1,3,5-triazin-2-yl)-5-hexyloxy-phenol, 2-[4,6-bis(2,4-dimethylphenyl)-1,3,5-triazin-2-yl]-5-(octyloxy)phenol.

In some embodiments, the composition further comprises other UV stabilizers such as an epoxy compound such as (3'-4'-epoxycyclohexane)methyl 3'-4'-epoxycyclohexyl-carboxylate and/or a HALS such as 4-hydroxy-2,2,6,6-tetramethyl-1-piperidinethanol-dimethyl succinate copolymer.

In another embodiment, the composition comprises 2-(4,6-diphenyl-1,3,5-triazin-2-yl)-5-hexyloxy-phenol. In another embodiment, the composition comprises 2-[4,6-bis(2,4-dimethylphenyl)-1,3,5-triazin-2-yl]-5-(octyloxy)phenol. In these embodiments, the amount of anti-UV agent is about 1 to about 3 weight percent based on the total weight of the composition.

In another embodiment, the composition comprises one or more anti-UV agents. Thus, in a further embodiment, the composition comprises 2-(4,6-diphenyl-1,3,5-triazin-2-yl)-5-hexyloxy-phenol and 4-hydroxy-2,2,6,6-tetramethyl-1-piperidinethanol-dimethyl succinate copolymer. In another embodiment, the composition comprises 2-[4,6-bis(2,4-dimethylphenyl)-1,3,5-triazin-2-yl]-5-(octyloxy)phenol and 4-hydroxy-2,2,6,6-tetramethyl-1-piperidinethanol-dimethyl succinate copolymer. In these and other embodiments, the composition may further comprise a cycloaliphatic epoxy UV stabilizer as described herein such as (3'-4'-epoxycyclohexane)methyl 3'-4'-epoxycyclohexyl-carboxylate or the like. In these embodiments, the total amount anti-UV agent is about 1 to about 4 weight percent based on the total weight of the composition.

### Polyolefin Homopolymer

The composition of the present invention may further comprise one or more polyolefin homopolymers. The polyolefin homopolymer may be selected from the group consisting of polyethylene (PE), polypropylene (PP), and polyisobutene (PIB). Polyisobutene, which may be a homopolymer or copolymer, was described previously. Thus, the term "polyethylene homopolymer" means a homopolymer of ethylene. The term "polypropylene homopolymer" means a homopolymer of propylene. The term "polybutene homopolymer" means a homopolymer of butylene as discussed above. The term "polyisobutene homopolymer" means a homopolymer of polyisobutene. In some embodiments, the composition comprises less than 1 weight percent of polyethylene homopolymer, polypropylene homopolymer, or a mixture thereof. In some embodiments, the composition comprises less than 0.5 weight percent, or less than 0.1 weight percent, or none at all of these homopolymers. Polyethylene homopolymers include high density polyethylenes and low density polyethylenes (but not linear low density polyethylenes, which are copolymers). Polyethylene homopolymers and polypropylene homopolymers as defined herein are nonelastomeric materials.

In some embodiments, the total amount of polyethylene, polypropylene, or mixture thereof is 0 to about 30 weight percent, more specifically, 0 to about 25 weight percent, and more specifically about 0 to about 20 weight percent based on the total weight of the composition. In some embodiments, the composition excludes polyethylene homopolymers and polypropylene homopolymers. In some embodiments, the composition is substantially free of polyethylene homopolymer and polypropylene homopolymer. In this context, "substantially free" means that no polyethylene homopolymer or polypropylene homopolymer is intentionally added to the composition.

In another embodiment, the polyolefin homopolymer is selected from the group consisting of polypropylene, and polyethyelene, or mixtures thereof.

In another embodiment, the polyolefin homopolymer is polypropylene which is present in an amount of about 2 to about 10 weight percent and more preferably 3 to about 8 weight percent based on the total weight of the composition.

### Ethylene/C₃-C₁₂ Alpha-Olefin Copolymer

The composition may further comprise a copolymer of ethylene and a C₃-C₁₂ alpha-olefin. For brevity, this component is sometimes referred to herein as an ethylene/alpha-olefin copolymer. The ethylene/alpha-olefin copolymer is defined herein as a copolymer comprising 25 to 95 weight percent, specifically 60 to 85 weight percent, of units derived from ethylene and 75 to 5 weight percent, specifically 40 to 15 weight percent, of units derived from a C₃-C₁₂ alpha-olefin. In some embodiments, the ethylene/alpha-olefin copolymer is a random copolymer such as, for example, ethylene-propylene rubber ("EPR"), linear low density polyethylene ("LLDPE"), or very low density polyethylene ("VLDPE").

In other embodiments, the ethylene/alpha-olefin copolymer is a block copolymer comprising at least one block consisting of ethylene homopolymer or propylene homopolymer and one block that is a random copolymer of ethylene and a C₃-C₁₂ alpha-olefin. Suitable alpha-olefins include propene, 1-butene, and 1-octene. In some embodiments, the ethylene/alpha-olefin copolymer has a melt flow index of about 0.1 to about 20 grams per 10 minutes measured at 200° C and 2.16 kilograms force. In some embodiments, the ethylene/alpha-olefin copolymer has a density of about 0.8 to about 0.9 grams per milliliter. In some embodiments, the ethylene/alpha-olefin copolymer is an ethylene-propylene rubber. In some embodiments, the ethylene/alpha-olefin copolymer is provided in the form of a melt-kneaded blend comprising block copolymer, ethylene/alpha-olefin copolymer, and mineral oil.

In embodiments, the composition comprises 0 to 50 weight percent of the ethylene/C₃-C₁₂ alpha-olefin copolymer based on the total weight of the composition.

In one embodiment, the ethylene/alpha-olefin copolymer comprises a mixture of an ethylene-octene copolymer, a maleic anhydride grafted ethylene-octene copolymer, and LLDPE which are present in an amount of about 15 to 30 weight percent based on the total weight of the composition, where in the weight percent of ethylene-octene copolymer is greater than the amount of maleic anhydride grafted ethylene-octene copolymer. In one embodiment, the weight percent ratio of ethylene-octene copolymer to maleic anhydride grafted ethylene-octene copolymer is about 2.5:1 to 5:1. In one embodiment the weight percent ratio of ethylene-octene copolymer to LLDPE is about 5:1 to 10:1.

### Colorants

The compositions of the present invention optionally include one or more colorants.

Colorants suitable for compositions of the present invention include pigments and/or dyes. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments. Pigments are generally used in amounts of 0.001 to 3 parts by weight, based on 100 parts by weight of polycarbonate and any additional polymer.

Exemplary dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes. Dyes are generally used in amounts of 0.0001 to 5 parts by weight, based on 100 parts by weight basedonthe total weight of the composition.

In one embodiment, the colorant is a white pigment. The white pigment contributes to the white or off-white color of the composition. Suitable white pigments include, for example, calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudo-boehmite, aluminum hydroxide, alumina, modified alumina, lithopone, zeolite, hydrated halloysite, magnesium carbonate, magnesium hydroxide, and mixtures thereof. In some embodiments, the white pigment is zinc sulfide, titanium dioxide (including rutile titanium dioxide), or a mixture thereof. In some embodiments, the white pigment is titanium dioxide.

The composition comprises white pigment in an amount of about 0.5 to about 25 weight percent, based on the total weight of the composition. Within this range, the white pigment can be titanium dioxide in an amount of about 4 to about 20 weight percent, based on the total weight of the composition, and more specifically from about 4 to about 10 weight percent based on the total weight of the composition.

In another embodiment, the colorant comprises a mixture of colorants. The mixture of colorants may include a white pigment such as TiO₂ and one or more additional colorants. In one embodiment the colorant comprises TiO₂ carbon black, Pigment Blue 29 and Pigment Red 101, and optionally one or more additional colorants. In this embodiment, the total amount of the colorant is about 4 to about 20 weight percent, based on the total weight of the composition. In another embodiment the colorant comprises TiO₂ carbon black, Pigment Blue 29 and Pigment Red 101.

### Other Additives

The composition may optionally further comprise one or more other additives known in the thermoplastics arts. Useful additives include stabilizers, mold release agents, processing aids, drip retardants, nucleating agents, antioxidants, anti-static agents, blowing agents, metal deactivators, antiblocking agents, nanoclays, fragrances (including fragrance-encapsulated polymers), and the like, and combinations thereof. Additives can be added in amounts that do not unacceptably detract from the desired appearance and physical properties of the composition. Such amounts can be determined by a skilled artisan without undue experimentation.

In addition to the poly(phenylene ether) and the block copolymer, the composition comprises a plasticizer. As used herein, the term "plasticizer" refers to a compound that is effective to plasticize the composition as a whole or at least one component of the composition. In some embodiments, the plasticizer is effective to plasticize the poly(phenylene ether). The plasticizers are typically low molecular weight, relatively nonvolatile molecules that dissolve in a polymer, separating the chains from each other and hence facilitating reptation and reducing the glass transition temperature of the composition. In some embodiments, the plasticizer has a glass transition temperature (T_{g}) of about -110 to -50° C, is miscible primarily with poly(phenylene ether) resin, and has a molecular weight less than or equal to 1,000 grams per mole.

Suitable plasticizers include, for example, benzoate esters (including dibenzoate esters), pentaerythritol esters, triaryl phosphates (including halogen substituted triaryl phosphates), phthalate esters, trimellitate esters, pyromellitate esters, and the like, and mixtures thereof.

In some embodiments, the plasticizer is a triaryl phosphate. Suitable triaryl phosphates include those having the structure

In some embodiments, the composition can exclude or be substantially free of components other than those described above. For example, the composition can be substantially free of other polymeric materials, such as homopolystyrenes (including syndiotactic polystyrenes), polyamides, polyesters, polycarbonates, and polypropylene-graft-polystyrenes. In this context, the term "substantially free" means that none of the specified component is intentionally added.

As the composition is defined as comprising multiple components, it will be understood that each component is chemically distinct, particularly in the instance that a single chemical compound may satisfy the definition of more than one component.

### Composition

In one aspect, the invention provides a polymer composition, comprising:
(a) 10 to 45 weight percent of a poly(phenylene ether);
(b) 5 to 65 weight percent of a hydrogenated block copolymer of an alkenyl aromatic compound and a conjugated diene;
(c) 0 to 20 weight percent of a polybutene
(d) 2 to 60 weight percent of a flame retardant;
(e) 0.1 to 20 weight percent of an anti-UV agent wherein the agent comprises a trisaryl-1,3,5-triazine;
(f) 0 to 50 weight percent of a copolymer of ethylene and a C₃-C₁₂ alpha-olefin; and
(g) 0 to 30 weight percent of a polyolefin homopolymer,
   wherein the polymer composition does not contain a benzotriazole-type UV absorber, wherein all weight percents are based on the total weight of the composition; and
   wherein an article made from the composition:
   (i) is substantially stainless;
   (ii) exhibits a CIELAB color shift (ΔE) of 3 or less after 168 hours of heat exposure at 75 °C; and
   (iii) exhibits a CIELAB color shift (ΔE) of 12 or less after 300 hours of xenon arc exposure according to ASTM D 4459.

In this and other embodiments, the poly(phenylene ether) is a poly (2,6-dimethyl-1,4-phenylene ether) having an intrinsic viscosity of 0.3 to 0.6 deciliter per gram measured in chloroform at 25 °C.

In this and other embodiments, the hydrogenated block copolymer of an alkenyl aromatic compound and a conjugated diene is a linear triblock polystyrene-poly(ethylene-butylene)-polystyrene copolymer such as Kraton™ G1650 from Kraton Performance Polymers in about 5 to 30 weight percent based on the total weight of the composition. In another embodiment, the composition comprises Kraton™ G1650 from Kraton Performance Polymers in about 5 to 15 weight percent based on the total weight of the composition. Alternatively, the hydrogenated block copolymer comprises a combination of two or more of hydrogenated block copolymers of an alkenyl aromatic compound and a conjugated diene. Thus, in another embodiment, the hydrogenated block copolymer of an alkenyl aromatic compound and a conjugated diene comprises a linear triblock polystyrene-poly(ethylenebutylene)-polystyrene copolymer such as Kraton™ A1536 from Kraton Polymers and a and a melt-kneaded blend such as TPE-SB2400 from Sumitomo Chemical Co. in about 30 to about 45 weight percent based on the total weight of the composition. Within this range, the amount of hydrogenated block copolymer may be about 30 to about 40 weight percent based on the total weight of the composition, wherein the weight percent of A1536 exceeds the weight percent of TPE-SB2400. In a further embodiment, the amount of Kraton™ A1536 may be about 15 to about 25 weight percent based on the total weight of the composition and the amount of TPE-SB2400 may be about 10 to about 20 weight percent based on the total weight of the composition. In a further embodiment, the amount of Kraton™ A1536 may be about 18 to about 22 weight percent based on the total weight of the composition and the amount of TPE-SB2400 may be about 13 to about 17 weight percent based on the total weight of the composition.

In this and other embodiments, the polybutene is an isobutene-butene copolymer having a number average molecular weight of about 800 atomic mass units.

In this and other embodiments, the flame retardant comprises a phosphoric acid salt, a metal hydroxide, an organic phosphate, a metallophosphorous salt, or a combination thereof. In a further embodiment, the flame retardant is selected from the group consisting of a triaryl phosphate, melamine polyphosphate, a metal dialkyl phosphinate, magnesium hydroxide, or a combination thereof.

In this and other embodiments, the anti-UV agent present in the composition is 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof.

In this and other embodiments, the composition comprises a 1,3,5-triaryl triazine-type UV absorber with: (i) a cycloaliphatic epoxy UV stabilizer or hindered amine light stabilizer; or (ii) a combination of a cycloaliphatic epoxy and a hindered amine light stabilizer.

In this and other embodiments, the anti-UV agent comprises a 1,3,5-triaryl triazine-type UV absorber with a cycloaliphatic epoxy UV stabilizer as described herein. In this and other embodiments, the cycloaliphatic epoxy UV stabilizer is (3'-4'-epoxycyclohexane)methyl 3'-4'-epoxycyclohexyl-carboxylate, in an amount of about 0.1 to about 1 weight percent based on the total weight of the composition.

In this and other embodiments, the anti-UV agent comprises a 1,3,5-triaryl triazine-type UV absorber with a hindered amine light stabilizer as described herein. In this and other embodiments, the hindered amine light stabilizer is 4-hydroxy-2,2,6,6-tetramethyl-1-piperidinethanol-dimethyl succinate copolymer, in an amount of about 0.1 to about 2 weight percent based on the total weight of the composition.

In this and other embodiments, the compositions comprises a 1,3,5-triaryl triazine-type UV absorber with one or more additional UV stabilizers such as a cycloaliphatic epoxy UV stabilizer such as (3'-4'-epoxycyclohexane)methyl 3'-4'-epoxycyclohexyl-carboxylate and/or a hindered amine light stabilizer such as 4-hydroxy-2,2,6,6-tetramethyl-1-piperidinethanol-dimethyl succinate copolymer.

In a further embodiment, the anti-UV agent comprises a 1,3,5-triaryl triazine-type UV absorber and an agent selected from other classes of ultraviolet radiation stabilizers (except benzotriazole-type UV absorbers), including benzophenone-type UV absorbers (including 2-hydroxybenzophenones and hydroxyphenylbenzophenones), cinnamate-type UV absorbers, oxanilide-type UV absorbers, benzoxazinone-type UV absorbers, phosphite compounds, and the like. Additional classes of ultraviolet radiation stabilizers are described in H. Zweifel, Ed., "Plastics Additive Handbook", 5th Edition, Cincinnati: Hanser Gardner Publications, Inc. (2001), pages 206-238.

In this and other embodiments, the composition provided herein contains about 0.1 to 20 weight percent of a 1,3,5-triaryl triazine-type UV absorber based on the total weight of the composition, provided that the composition does not contain a benzotriazole-type UV absorber. In some embodiments, the compositions contain about 1 to about 10 weight percent of a 1,3,5-triaryl triazine-type UV absorber which is 2-(4,6-diphenyl-1,3,5-triazin-2-yl)-5-hexyloxy-phenol, 2-[4,6-bis(2,4-dimethylphenyl)-1,3,5-triazin-2-yl]-5-(octyloxy)phenol, or a combination thereof.

In another embodiment, the composition comprises 2-(4,6-diphenyl-1,3,5-triazin-2-yl)-5-hexyloxy-phenol. In another embodiment, the composition comprises 2-[4,6-bis(2,4-dimethylphenyl)-1,3,5-triazin-2-yl]-5-(octyloxy)phenol. In these embodiments, the amount of anti-UV agent is about 1 to about 4 weight percent based on the total weight of the composition.

In a further embodiment, the composition comprises 2-(4,6-diphenyl-1,3,5-triazin-2-yl)-5-hexyloxy-phenol and 4-hydroxy-2,2,6,6-tetramethyl-1-piperidinethanol-dimethyl succinate copolymer. In another embodiment, the composition comprises 2-[4,6-bis(2,4-dimethylphenyl)-1,3,5-triazin-2-yl]-5-(octyloxy)phenol and 4-hydroxy-2,2,6,6-tetramethyl-1-piperidinethanol-dimethyl succinate copolymer. In these and other embodiments, the composition may further comprise a cycloaliphatic epoxy UV stabilizer as described herein such as (3'-4'-epoxycyclohexane)methyl 3'-4'-epoxycyclohexyl-carboxylate or the like. In these embodiments, the total amount anti-UV agent is about 1 to about 4 weight percent based on the total weight of the composition.

In another embodiment, the composition further comprises a colorant. In a further embodiment, the colorant is a white pigment. In a further embodiment, the white pigment is titanium dioxide (TiO₂) in an amount of about 4 to about 20 weight percent, based on the total weight of the composition, and more specifically from about 4 to about 10 weight percent based on the total weight of the composition.

In a further embodiment, the polymer composition comprises:
(a) 15 to 35 weight percent of a poly(phenylene ether);
(b) 30 to 50 weight percent of a combination of two or more hydrogenated block copolymers of an alkenyl aromatic compound and a conjugated diene;
(c) 2 to 20 weight percent of a polybutene;
(d) 15 to 40 weight percent of a flame retardant comprising melamine polyphosphate and a metal dialkyl phosphinate;
(e) 0.1 to 20 weight percent of an anti-UV agent wherein the agent comprises a trisaryl-1,3,5-triazine; and
(f) 2 to 20 weight percent of a polypropylene homopolymer; and
wherein an article made from the composition exhibits a CIELAB color shift (ΔE) of 5 or less after 300 hours of xenon arc exposure according to ASTM D 4459.

In a further embodiment, the poly(phenylene ether) comprises a poly(2,6-dimethyl-1,4-phenylene ether) having an intrinsic viscosity of 0.3 to 0.6 deciliter per gram measured in chloroform at 25 °C.

In a further embodiment, the trisaryl-1,3,5-triazinyl anti-UV agent present in the composition is 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof. In a further embodiment, the anti-UV agent in the composition further comprises a cycloaliphatic epoxy UV stabilizer as described herein such as (3'-4'-epoxycyclohexane)methyl 3'-4'-epoxycyclohexyl-carboxylate in an amount of about 0.1 to about 1 weight percent based on the total weight of the composition.

In a further embodiment, the metal dialkyl phosphinate is aluminum diethylphosphinate. In another embodiment, the flame retardant further comprises a triaryl phosphate. In a further embodiment, the triaryl phosphate is bisphenol A bis(diphenyl phosphate) or resorcinol bis(diphenyl phosphate). In a further embodiment, the flame retardant comprises 40 to 60 weight percent bisphenol A bis(diphenyl phosphate), 20 to 30 weight percent melamine polyphosphate and 20 to 30 weight percent of aluminum diethylphosphinate based on the total weight percent of the flame retardant used. In a further embodiment, the composition comprises about 8 to about 12 weight percent bisphenol A bis(diphenyl phosphate), about 4 to about 6 weight percent melamine polyphosphate and about 4 to about 8 weight percent of aluminum diethylphosphinate based on the total weight percent of the composition.

In a further embodiment, the composition may comprise a colorant. In a further embodiment, the colorant is a white pigment. In a further embodiment, the white pigment is titanium dioxide (TiO₂). The titanium dioxide is present in an amount of about 4 to about 20 weight percent, based on the total weight of the composition, and more specifically from about 4 to about 10 weight percent based on the total weight of the composition.

Thus, in a further embodiment, the polymer composition comprises:
(a) 15 to 35 weight percent of poly(2,6-dimethyl-1,4-phenylene ether) having an intrinsic viscosity of 0.3 to 0.6 deciliter per gram measured in chloroform at 25 °C;
(b) 30 to 50 weight percent of a combination of two or more hydrogenated block copolymers of an alkenyl aromatic compound and a conjugated diene;
(c) 2 to 20 weight percent of a polybutene;
(d) 15 to 40 weight percent of a flame retardant comprising melamine polyphosphate and aluminum diethylphosphinate and a triaryl phosphate;
(e) 0.1 to 20 weight percent of an anti-UV agent wherein the agent comprises a trisaryl-1,3,5-triazinyl UV absorber and optionally (3'-4'-epoxycyclohexane)methyl 3'-4'-epoxycyclohexyl-carboxylate; and
(f) 2 to 20 weight percent of a polypropylene homopolymer; and
wherein an article made from the composition exhibits a CIELAB color shift (ΔE) of 5 or less after 300 hours of xenon arc exposure according to ASTM D 4459.

In another embodiment, the polymer composition comprises:
(a) 15 to 35 weight percent of poly(2,6-dimethyl-1,4-phenylene ether) having an intrinsic viscosity of 0.3 to 0.6 deciliter per gram measured in chloroform at 25 °C;
(b) 30 to 50 weight percent of a combination of two or more hydrogenated block copolymers of an alkenyl aromatic compound and a conjugated diene;
(c) 2 to 20 weight percent of a polybutene;
(d) 15 to 40 weight percent of a flame retardant comprising melamine polyphosphate, aluminum diethylphosphinate, and bisphenol A bis(diphenyl phosphate) or resorcinol bis(diphenyl phosphate);
(e) 0.1 to 20 weight percent of an anti-UV agent wherein the agent comprises a trisaryl-1,3,5-triazinyl UV absorber and (3'-4'-epoxycyclohexane)methyl 3'-4'-epoxycyclohexyl-carboxylate; and
(f) 2 to 20 weight percent of a polypropylene homopolymer; and
wherein an article made from the composition exhibits a CIELAB color shift (ΔE) of 5 or less after 300 hours of xenon arc exposure according to ASTM D 4459.

In this and other embodiments, the trisaryl-1,3,5-triazinyl UV absorber is 2-(4,6-diphenyl-1,3,5-triazin-2-yl)-5-hexyloxy-phenol, 2-[4,6-bis(2,4-dimethylphenyl)-1,3,5-triazin-2-yl]-5-(octyloxy)phenol, or a combination thereof. In a further embodiment, the anti-UV agent in the composition further comprises a hindered amine light stabilizer such as the hindered amine light stabilizer is and 4-hydroxy-2,2,6,6-tetramethyl-1-piperidinethanol-dimethyl succinate copolymer in about 0.1 to about 1 weight percent based on the total weight of the composition.

In a further embodiment, the flame retardant comprises 40 to 60 weight percent bisphenol A bis(diphenyl phosphate), 20 to 30 weight percent melamine polyphosphate and 20 to 30 weight percent of aluminum diethylphosphinate based on the total weight percent of the flame retardant used. In a further embodiment, the composition comprises about 8 to about 12 weight percent bisphenol A bis(diphenyl phosphate), about 4 to about 6 weight percent melamine polyphosphate and about 4 to about 8 weight percent of aluminum diethylphosphinate based on the total weight percent of the composition.

In a further embodiment, the composition comprises a colorant. In a further embodiment, the colorant is a white pigment. In a further embodiment, the white pigment is titanium dioxide (TiO₂). The titanium dioxide is present in an amount of about 4 to about 20 weight percent, based on the total weight of the composition, and more specifically from about 4 to about 8 weight percent based on the total weight of the composition.

In a further embodiment, the anti-UV agent in the composition further comprises a cycloaliphatic epoxy UV stabilizer as described herein such as (3'-4'-epoxycyclohexane)methyl 3'-4'-epoxycyclohexyl-carboxylate in an amount of about 0.1 to about 1 weight percent based on the total weight of the composition.

In another embodiment the polymer composition comprises:
(a) 15 to 30 weight percent of a poly(2,6-dimethyl-1,4-phenylene ether) havingan intrinsic viscosity of 0.3 to 0.6 deciliter per gram measured in chloroform at 25 °C;
(b) 30 to 45 weight percent of a combination of two or more hydrogenated block copolymers of an alkenyl aromatic compound and a conjugated diene;
(c) 5 to 10 weight percent of a polybutene;
(d) 2 to 12 weight percent of bisphenol A bis(diphenyl phosphate);
(e) 2 to 10 weight percent of melamine polyphosphate;
(f) 5 to 20 weight percent of aluminum diethylphosphinate;
(g) 0.1 to 10 weight percent of an anti-UV agent wherein the agent comprises 2-(4,6-diphenyl-1,3,5-triazin-2-yl)-5-hexyloxy-phenol or 2-[4,6-bis(2,4-dimethylphenyl)-1,3,5-triazin-2-yl]-5-(octyloxy)phenol;
(h) 5 to 10 weight percent of a polypropylene homopolymer; and
(i) 4 to 20 weight percent of titanium dioxide.

In a further embodiment, the anti-UV agent in the composition further comprises a cycloaliphatic epoxy UV stabilizer as described herein such as (3'-4'-epoxycyclohexane)methyl 3'-4'-epoxycyclohexyl-carboxylate in an amount of about 0.1 to about 1 weight percent based on the total weight of the composition.

In another embodiment, the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 30 to 45 weight percent of a combination of two or more hydrogenated block copolymers of an alkenyl aromatic compound and a conjugated diene;
(c) 5 to 10 weight percent of a polybutene;
(d) 2 to 12 weight percent of bisphenol A bis(diphenyl phosphate);
(e) 2 to 10 weight percent of melamine polyphosphate;
(f) 5 to 20 weight percent of aluminum diethylphosphinate;
(g) 0.1 to 10 weight percent of an anti-UV agent wherein the agent comprises 2-(4,6-diphenyl-1,3,5-triazin-2-yl)-5-hexyloxy-phenol;
(h) 5 to 10 weight percent of a polypropylene homopolymer; and
(i) 4 to 20 weight percent of titanium dioxide.

In a further embodiment, the anti-UV agent in the composition further comprises a cycloaliphatic epoxy UV stabilizer as described herein such as (3'-4'-epoxycyclohexane)methyl 3'-4'-epoxycyclohexyl-carboxylate in an amount of about 0.1 to about 1 weight percent based on the total weight of the composition.

In another embodiment the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 30 to 45 weight percent of a combination of two or more hydrogenated block copolymers of an alkenyl aromatic compound and a conjugated diene;
(c) 5 to 10 weight percent of a polybutene;
(d) 2 to 12 weight percent of bisphenol A bis(diphenyl phosphate);
(e) 2 to 10 weight percent of melamine polyphosphate;
(f) 5 to 20 weight percent of aluminum diethylphosphinate;
(g) 0.1 to 10 weight percent of an anti-UV agent wherein the agent comprises 2-[4,6-bis(2,4-dimethylphenyl)-1,3,5-triazin-2-yl]-5-(octyloxy)phenol;
(h) 5 to 10 weight percent of a polypropylene homopolymer; and
(i) 4 to 20 weight percent of titanium dioxide.

In a further embodiment, the anti-UV agent in the composition further comprises a cycloaliphatic epoxy UV stabilizer as described herein such as (3'-4'-epoxycyclohexane)methyl 3'-4'-epoxycyclohexyl-carboxylate in an amount of about 0.1 to about 1 weight percent based on the total weight of the composition.

In another embodiment the polymer composition comprises:
(a) 15 to 35 weight percent of a poly(phenylene ether;
(b) 5 to 30 weight percent of a hydrogenated block copolymer of an alkenyl aromatic compound and a conjugated diene;
(c) 2 to 20 weight percent of a polybutene;
(d) 15 to 50 weight percent of a magnesium hydroxide flame retardant;
(e) 0.1 to 10 weight percent of an anti-UV agent wherein the agent comprises a trisaryl-1,3,5-triazine; and
(f) 5 to 40 weight percent of a copolymer of ethylene and a C₃-C₁₂ alpha-olefin; and wherein an article made from the composition exhibits a CIELAB color shift (ΔE) of 5
or less after 300 hours of xenon arc exposure according to ASTM D 4459.

In a further embodiment, the poly(phenylene ether) comprises a poly (2,6-dimethyl-1,4-phenylene ether) having an intrinsic viscosity of 0.3 to 0.6 deciliter per gram measured in chloroform at 25 °C.

In a further embodiment, the hydrogenated block copolymer of an alkenyl aromatic compound and a conjugated diene is a linear triblock polystyrene-poly(ethylene-butylene)-polystyrene copolymer such as Kraton™ G1650 from Kraton Performance Polymers in about 5 to 30 weight percent based on the total weight of the composition. In another embodiment, the composition comprises Kraton™ G1650 from Kraton Performance Polymers in about 5 to 15 weight percent based on the total weight of the composition.

In a further embodiment, the flame retardant comprises a coated magnesium hydroxide. In a further embodiment, the magnesium hydroxide is coated with an aminosilane. In a further embodiment, the composition comprises about 25 to about 35 weight percent of the magnesium hydroxide based on the total weight of the composition.

In a further embodiment, the polybutene is an isobutene-butene copolymer having a number average molecular weight of about 800 atomic mass units.

In this and other embodiments, the trisaryl-1,3,5-triazinyl anti-UV agent present in the composition is 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof.

In a further embodiment, the anti-UV agent may further comprise a hindered amine light stabilizer as described herein. In this and other embodiments, the hindered amine light stabilizer is and 4-hydroxy-2,2,6,6-tetramethyl-1-piperidinethanol-dimethyl succinate copolymer, in an amount of about 0.1 to about 2 weight percent based on the total weight of the composition.

In a further embodiment, the a copolymer of ethylene and a C₃-C₁₂ alpha-olefin is a mixture comprising maleic anhydride grafted ethylene-octene copolymer such as is available from Dupont Corp. as Fusabond™ N493, ethylene-octene copolymer, CAS Reg. No. 26221-73-8, such as is available from ExxonMobil Chemical Co. as Exact™ 8210, and linear low-density polyethylene, CAS Reg. No. 66070-58-4, such as is available from Nippon Unicar Co. Ltd. as NUCG-5381. In a further embodiment, the composition comprises about 15 to about 20 weight percent ethylene-octene copolymer, about 3 to about 7 weight percent maleic anhydride grafted ethylene-octene copolymer, and about 2 to about 4 weight percent linear low-density polyethylene. In a further embodiment, the composition comprises about 16 to about 18 weight percent ethylene-octene copolymer, about 4 to about 6 weight percent maleic anhydride grafted ethylene-octene copolymer, and about 2.5 to about 3.5 weight percent and linear low-density polyethylene.

In another embodiment, the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 30 to 45 weight percent of a combination of a linear triblock polystyrene-poly(ethylene-butylene)-polystyrene copolymer and a melt-kneaded blend comprising about 35 weight percent polystyrene-poly(ethylene-butylene)-polystyrene;
(c) 5 to 10 weight percent of an isobutene-butene copolymer having a number average molecular weight of about 800 atomic mass units such as Indopol™ H50;
(d) 2 to 10 weight percent of bisphenol A bis(diphenyl phosphate);
(e) 2 to 10 weight percent of melamine polyphosphate;
(f) 0.1 to 10 weight percent of an anti-UV agent wherein the agent comprises 2-(4,6-diphenyl-1,3,5-triazin-2-yl)-5-hexyloxy-phenol and 4-hydroxy-2,2,6,6-tetramethyl-1-piperidinethanol-dimethyl succinate copolymer;
(g) 5 to 10 weight percent of a polypropylene homopolymer; and
(h) 4 to 6 weight percent magnesium hydroxide; and
(i) 4 to 20 weight percent of titanium dioxide.

The anti-UV agent in this composition may further comprise cycloaliphatic epoxy UV stabilizer as described herein such as (3'-4'-epoxycyclohexane)methyl 3'-4'-epoxycyclohexyl-carboxylate in an amount of about 0.1 to about 1 weight percent based on the total weight of the composition.

In another embodiment, the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 30 to 45 weight percent of a combination of two or more hydrogenated block
   copolymers of an alkenyl aromatic compound and a conjugated diene;
(c) 5 to 10 weight percent of a polybutene;
(d) 2 to 10 weight percent of bisphenol A bis(diphenyl phosphate);
(e) 2 to 10 weight percent of melamine polyphosphate;
(f) 5 to 20 weight percent of aluminum diethylphosphinate;
(g) 0.1 to 10 weight percent of an anti-UV agent wherein the agent comprises 2-(4,6-diphenyl-1,3,5-triazin-2-yl)-5-hexyloxy-phenol;
(h) 5 to 10 weight percent of a polypropylene homopolymer; and
(i) 4 to 20 weight percent of titanium dioxide.

In another embodiment, the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 30 to 45 weight percent of a combination of a linear triblock polystyrene-poly(ethylene-butylene)-polystyrene copolymer and a melt-kneaded blend comprising about 35 weight percent polystyrene-poly(ethylene-butylene)-polystyrene;
(c) 5 to 10 weight percent of an isobutene-butene copolymer having a number average molecular weight of about 800 atomic mass units such as Indopol™ H50;
(d) 2 to 12 weight percent of bisphenol A bis(diphenyl phosphate);
(e) 2 to 10 weight percent of melamine polyphosphate;
(f) 5 to 20 weight percent of aluminum diethylphosphinate;
(g) 0.1 to 10 weight percent of an anti-UV agent wherein the agent comprises 2-(4,6-diphenyl-1,3,5-triazin-2-yl)-5-hexyloxy-phenol;
(h) 5 to 10 weight percent of a polypropylene homopolymer; and
(i) 4 to 20 weight percent of titanium dioxide.

In another embodiment the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 30 to 45 weight percent of a combination of a linear triblock polystyrene-poly(ethylene-butylene)-polystyrene copolymer and a melt-kneaded blend comprising about 35 weight percent polystyrene-poly(ethylene-butylene)-polystyrene;
(c) 5 to 10 weight percent of an isobutene-butene copolymer having a number average molecular weight of about 800 atomic mass units such as Indopol™ H50;
(d) 2 to 10 weight percent of bisphenol A bis(diphenyl phosphate);
(e) 2 to 10 weight percent of melamine pyrophosphate;
(f) 5 to 20 weight percent of aluminum diethylphosphinate;
(g) 0.1 to 10 weight percent of an anti-UV agent wherein said agent comprises
   2-[4,6-bis(2,4-dimethylphenyl)-1,3,5-triazin-2-yl]-5-(octyloxy)phenol and 4-hydroxy-2,2,6,6-tetramethyl-1-piperidinethanol-dimethyl succinate copolymer;
(h) 5 to 10 weight percent of a polypropylene homopolymer; and
(i) 4 to 20 weight percent of titanium dioxide.

In a further embodiment, the anti-UV agent in the composition may further comprise cycloaliphatic epoxy UV stabilizers described herein such as (3'-4'-epoxycyclohexane)methyl 3'-4'-epoxycyclohexyl-carboxylate in an amount of about 0.1 to about 1 weight percent based on the total weight of the composition.

In a further embodiment, the polymer composition comprises:
(a) 10 to 45 weight percent of a poly(phenylene ether);
(b) 5 to 65 weight percent of a hydrogenated block copolymer of an alkenyl aromatic compound and a conjugated diene;
(c) 0 to 20 weight percent of a polybutene;
(d) 2 to 60 weight percent of a flame retardant;
(e) 0.1 to 20 weight percent of an anti-UV agent wherein the agent comprises a trisaryl-1,3,5-triazine with:
   (i) a cycloaliphatic epoxy or hindered amine light stabilizer; or
   (ii) a combination of a cycloaliphatic epoxy and a hindered amine light stabilizer;
(f) 0 to 50 weight percent of a copolymer of ethylene and a C₃-C₁₂ alpha-olefin; and
(g) 0 to 30 weight percent of a polyolefin homopolymer,
   wherein the polymer composition does not contain a benzotriazole-type UV absorber, wherein all weight percents are based on the total weight of the composition, and wherein an article made from the composition:
   (i) is substantially stainless;
   (ii) exhibits a CIELAB color shift, (ΔE) of 3 or less after 168 hours of heat exposure at 75 °C; and
   (iii) exhibits a CIELAB color shift, (ΔE) of 12 or less after 300 hours of xenonarc exposure according to ASTM D 4459.

In this and other embodiments, the hindered amine light stabilizer is and 4-hydroxy-2,2,6,6-tetramethyl-1-piperidinethanol-dimethyl succinate copolymer, in an amount of about 0.1 to about 2 weight percent based on the total weight of the composition.

In a further embodiment, the polymer composition comprises:
(a) 10 to 45 weight percent of a poly(phenylene ether);
(b) 5 to 65 weight percent of a hydrogenated block copolymer of an alkenyl aromatic compound and a conjugated diene;
(c) 0 to 20 weight percent of a polybutene;
(d) 2 to 60 weight percent of a flame retardant;
(e) 0.1 to 20 weight percent of an anti-UV agent wherein the agent comprises a trisaryl-1,3,5-triazine with:
   (i) a cycloaliphatic epoxy or 4-hydroxy-2,2,6,6-tetramethyl-1-pipendinethanol-dimethyl succinate copolymer; or
   (ii) a combination of a cycloaliphatic epoxy and 4-hydroxy-2,2,6,6-tetramethyl-1-piperidinethanol-dimethyl succinate copolymer;
(f) 0 to 50 weight percent of a copolymer of ethylene and a C₃-C₁₂ alpha-olefin; and
(g) 0 to 30 weight percent of a polyolefin homopolymer,
   wherein the polymer composition does not contain a benzotriazole-type UV absorber, wherein all weight percents are based on the total weight of the composition, and wherein an article made from the composition:
   (i) is substantially stainless;
   (ii) exhibits a CIELAB color shift, (ΔE) of 3 or less after 168 hours of heat exposure at 75 °C; and
   (iii) exhibits a CIELAB color shift, (ΔE) of 12 or less after 300 hours of xenon arc exposure according to ASTM D 4459.

More particularly, the cycloaliphatic epoxy is (3'-4'-epoxycyclohexane)methyl 3'-4'-epoxycyclohexyl-carboxylate.

In another embodiment, the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 5 to 40 weight percent of a hydrogenated block copolymer of an alkenyl aromatic compound and a conjugated diene;
(c) 2 to 10 weight percent of an isobutene-butene copolymer having a number average molecular weight of about 800 atomic mass units such as Indopol™ H50;
(d) 15 to 35 weight percent of a flame retardant selected from the group consisting of a triaryl phosphate, melamine polyphosphate, a metal dialkyl phosphinate, magnesium hydroxide, or a combination thereof;
(e) 1 to 5 weight percent of an anti-UV agent wherein the agent comprises a trisaryl-1,3,5-triazine which is 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof with:
   (i) a cycloaliphatic epoxy or hindered amine light stabilizer; or
   (ii) a combination of a cycloaliphatic epoxy and a hindered amine light stabilizer;
(f) 0 to 30 weight percent of a copolymer of ethylene and a C₃-C₁₂ alpha-olefin; and
(g) 0 to 10 weight percent of a polypropylene homopolymer; and
(h) 4 to 10 weight percent of titanium dioxide;
   wherein the polymer composition does not contain a benzotriazole-type UV absorber, wherein all weight percents are based on the total weight of the composition, and wherein an article made from the composition:
   (i) is substantially stainless;
   (ii) exhibits a CIELAB color shift, (ΔE) of 3 or less after 168 hours of heat exposure at 75 °C; and
   (iii) exhibits a CIELAB color shift, (ΔE) of 12 or less after 300 hours of xenon arc exposure according to ASTM D 4459.

More particularly, the cycloaliphatic epoxy is (3'-4'-epoxycyclohexane)methyl 3'-4'-epoxycyclohexyl-carboxylate and the hindered amine light stabilizer is 4-hydroxy-2,2,6,6-tetramethyl-1-piperidinethanol-dimethyl succinate copolymer.

In a further embodiment, the polymer composition comprises:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 5 to 40 weight percent of a hydrogenated block copolymer of an alkenyl aromatic compound and a conjugated diene;
(c) 2 to 10 weight percent of an isobutene-butene copolymer having a number average molecular weight of about 800 atomic mass units such as Indopol™ H50;
(d) 15 to 35 weight percent of a flame retardant selected from the group consisting of a triaryl phosphate, melamine polyphosphate, a metal dialkyl phosphinate, magnesium hydroxide, or a combination thereof;
(e) 1 to 5 weight percent of an anti-UV agent wherein the agent comprises a trisaryl-1,3,5-triazine which is 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof with:
   (i) (3'-4'-epoxycyclohexane)methyl 3'-4'-epoxycyclohexyl-carboxylate or 4-hydroxy-2,2,6,6-tetramethyl-1-piperidinethanol-dimethyl succinate copolymer; or
   (ii) a combination of (3'-4'-epoxycyclohexane)methyl 3'-4'-epoxycyclohexyl-carboxylate and 4-hydroxy-2,2,6,6-tetramethyl-1-piperidinethanol-dimethyl succinate copolymer;
(f) 0 to 30 weight percent of a copolymer of ethylene and a C₃-C₁₂ alpha-olefin; and
(g) 0 to 10 weight percent of a polypropylene homopolymer; and
(h) 4 to 10 weight percent of titanium dioxide;
   wherein the polymer composition does not contain a benzotriazole-type UV absorber, wherein all weight percents are based on the total weight of the composition, and wherein an article made from the composition:
   (i) is substantially stainless;
   (ii) exhibits a CIELAB color shift, (ΔE) of 3 or less after 168 hours of heat exposure at 75 °C; and
   (iii) exhibits a CIELAB color shift, (ΔE) of 12 or less after 300 hours of xenon arc exposure according to ASTM D 4459.

### Process and Articles

In another aspect, the invention provides a process for jacketing an electrical cable or plug. The process comprises extrusion coating an electrical cable or plug with a composition as described in the previous embodiments.

In another aspect, the invention provides an extrusion coated article comprising the composition as described in the previous embodiments.

In another aspect, the invention provides an injection molded article comprising the composition as described in the previous embodiments.

The following examples illustrate the scope of the invention. The examples and preparations which follow are provided to enable those skilled in the art to more clearly understand and to practice the present invention. They should not be considered as limiting the scope of the invention, but merely as being illustrative and representative thereof.

### Embodiments

The invention includes the following embodiments.
Embodiment 1. A polymer composition, comprising:
   (a) 10 to 45 weight percent of a poly(phenylene ether);
   (b) 5 to 65 weight percent of a hydrogenated block copolymer of an alkenyl aromatic compound and a conjugated diene;
   (c) 0 to 20 weight percent of a polybutene;
   (d) 2 to 60 weight percent of a flame retardant;
   (e) 0.1 to 20 weight percent of an anti-UV agent wherein the agent comprises a trisaryl-1,3,5-triazine;
   (f) 0 to 50 weight percent of a copolymer of ethylene and a C₃-C₁₂ alpha-olefin; and
   (g) 0 to 30 weight percent of a polyolefin homopolymer,
      wherein the polymer composition does not contain a benzotriazole-type UV absorber, wherein all weight percents are based on the total weight of the composition, and
      wherein an article made from the composition:
      (i) is substantially stainless;
      (ii) exhibits a CIELAB color shift (ΔE) of 3 or less after 168 hours of heat exposure at 75 °C; and
      (iii) exhibits a CIELAB color shift (ΔE) of 12 or less after 300 hours of xenon arc exposure according to ASTM D 4459.
Embodiment 2. The composition of Embodiment 1 wherein the anti-UV agent comprises a trisaryl-1,3,5-triazine with (i) a cycloaliphatic epoxy or hindered amine light stabilizer; or (ii) a combination of a cycloaliphatic epoxy and a hindered amine light stabilizer.
Embodiment 3. The composition of Embodiments 1-2 wherein the trisaryl-1,3,5-triazine comprises 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof.
Embodiment 4. The composition of claims 1-3wherein the anti-UV agent comprises a cycloaliphatic epoxy UV stabilizer.
Embodiment 5. The composition of any of Embodiments 1-4, wherein the flame retardant comprises a phosphoric acid salt, a metal hydroxide, an organic phosphate, a metallophosphorous salt, or a combination thereof.
Embodiment 6. The composition of Embodiment 5, wherein the flame retardant is selected from the group consisting of a triaryl phosphate, melamine polyphosphate, a metal dialkyl phosphinate, magnesium hydroxide, or a combination thereof.
Embodiment 7. The composition of any of Embodiments 1-6, wherein the hydrogenated block copolymer comprises a combination of two or more hydrogenated block copolymers of an alkenyl aromatic compound and a conjugated diene.
Embodiment 8. The composition of Embodiment 1, comprising:
   (a) 15 to 35 weight percent of a poly(phenylene) ether;
   (b) 30 to 50 weight percent of a combination of two or more hydrogenated block copolymers of an alkenyl aromatic compound and a conjugated diene;
   (c) 2 to 20 weight percent of a polybutene copolymer;
   (d) 15 to 40 weight percent of a flame retardant comprising melamine polyphosphate and a metal dialkyl phosphinate;
   (e) 0.1 to 20 weight percent of an anti-UV agent wherein the agent comprises a trisaryl-1,3,5-triazine; and
   (f) 2 to 20 weight percent of a polypropylene homopolymer,
   wherein an article made from the composition exhibits a CIELAB color shift (ΔE) of 5 or
   less after 300 hours of xenon arc exposure according to ASTM D 4459.
Embodiment 9. The composition of any of Embodiments 1-8, wherein the poly(phenylene ether) comprises a poly (2,6-dimethyl-1,4-phenylene ether) having an intrinsic viscosity of 0.3 to 0.6 deciliter per gram measured in chloroform at 25 °C.
Embodiment 10. The composition of Embodiments 8-9, wherein the trisaryl-1,3,5-triazine comprises 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof.
Embodiment 11. The composition of Embodiments 8-10, wherein the anti-UV agent further comprises a cycloaliphatic epoxy UV stabilizer as described herein such as (3'-4'-epoxycyclohexane)methyl 3'-4'-epoxycyclohexyl-carboxylate in an amount of about 0.1 to about 1 weight percent based on the total weight of the composition.
Embodiment 12. The composition of Embodiments 8-11, wherein the metal dialkyl phosphinate is aluminum diethylphosphinate.
Embodiment 13. The composition of Embodiments 8-12, wherein the flame retardant further comprises a triaryl phosphate.
Embodiment 14. The composition of Embodiment 13, wherein the triaryl phosphate is bisphenol A bis(diphenyl phosphate) or resorcinol bis(diphenyl phosphate).
Embodiment 15. The composition of Embodiments 8-13, wherein the flame retardant comprises 40 to 60 weight percent bisphenol A bis(diphenyl phosphate), 20 to 30 weight percent melamine polyphosphate and 20 to 30 weight percent of aluminum diethylphosphinate, based on the total weight percent of the flame retardant used.
Embodiment 16. The composition of Embodiments 1-15, further comprising a colorant.
Embodiment 17. The composition of Embodiment 16, wherein the colorant comprises a white pigment.
Embodiment 18. The composition of Embodiment 17, wherein the white pigment comprises titanium dioxide.
Embodiment 19. The composition of Embodiment 1, comprising:
   (a) 15 to 30 weight percent of a poly(2,6-dimethyl-1,4-phenylene ether) having an intrinsic viscosity of 0.3 to 0.6 deciliter per gram measured in chloroform at 25 °C;
   (b) 30 to 45 weight percent of a combination of two or more hydrogenated block copolymers of an alkenyl aromatic compound and a conjugated diene;
   (c) 5 to 10 weight percent of a polybutene;
   (d) 2 to 10 weight percent of bisphenol A bis(diphenyl phosphate);
   (e) 2 to 10 weight percent of melamine polyphosphate;
   (f) 5 to 20 weight percent of aluminum diethylphosphinate;
   (g) 0.1 to 10 weight percent of an anti-UV agent wherein the agent comprises 2-(4,6-diphenyl-1,3,5-triazin-2-yl)-5-hexyloxy-phenol;
   (h) 5 to 10 weight percent of a polypropylene homopolymer; and
   (i) 4 to 20 weight percent of titanium dioxide.
Embodiment 20. The composition of Embodiment 1, comprising:
   (a) 15 to 35 weight percent of a poly(phenylene ether);
   (b) 5 to 30 weight percent of a hydrogenated block copolymer of an alkenyl aromatic compound and a conjugated diene;
   (c) 2 to 20 weight percent of a polybutene;
   (d) 15 to 50 weight percent of a magnesium hydroxide flame retardant;
   (e) 0.1 to 10 weight percent of an anti-UV agent wherein the agent comprises a trisaryl-1,3,5-triazine; and
   (f) 5 to 40 weight percent of a copolymer of ethylene and a C₃-C₁₂ alpha-olefin, wherein an article made from the composition exhibits a CIELAB color shift (ΔE) of 5
   or less after 300 hours of xenon arc exposure according to ASTM D 4459.
Embodiment 21. The composition of Embodiment 20 wherein the poly(phenylene ether) comprises a poly (2,6-dimethyl-1,4-phenylene ether) having an intrinsic viscosity of 0.3 to 0.6 deciliter per gram measured in chloroform at 25 °C.
Embodiment 22. The composition of Embodiment 20 or 21, wherein the flame retardant comprises a coated magnesium hydroxide.
Embodiment 23. The composition of Embodiment 22, wherein the magnesium hydroxide is coated with an amino silane.
Embodiment 24. The composition of any of Embodiments 19-23 wherein the polybutene is a isobutene-butene copolymer having a number average molecular weight of about 800 atomic mass units.
Embodiment 25. The composition of Embodiments 1-24, comprising:
   (a) 10 to 45 weight percent of a poly(phenylene ether);
   (b) 5 to 65 weight percent of a hydrogenated block copolymer of an alkenyl aromatic compound and a conjugated diene;
   (c) 0 to 20 weight percent of a polybutene;
   (d) 2 to 60 weight percent of a flame retardant;
   (e) 0.1 to 20 weight percent of an anti-UV agent wherein said agent comprises a trisaryl-1,3,5-triazine with:
      (i) a cycloaliphatic epoxy or poly(4-hydroxy-2,2,6,6-tetramethyl-piperidine ethanol-alt-1,4-butanedioic acid); or
      (ii) a combination of a cycloaliphatic epoxy and poly(4-hydroxy-2,2,6,6-tetramethyl-1-piperidine ethanol-alt-1,4-butanedioic acid);
   (f) 0 to 50 weight percent of a copolymer of ethylene and a C₃-C₁₂ alpha-olefin; and
   (g) 0 to 30 weight percent of a polyolefin homopolymer,
      wherein said polymer composition does not contain a benzotriazole-type UV absorber, wherein all weight percents are based on the total weight of the composition, and
      wherein an article made from the composition:
      (i) is substantially stainless;
      (ii) exhibits a CIELAB color shift, (ΔE) of 3 or less after 168 hours of heat exposure at 75 °C; and
      (iii) exhibits a CIELAB color shift, (ΔE) of 12 or less after 300 hours of xenon arc exposure according to ASTM D 4459.
Embodiment 26. A process for jacketing an electrical cable or plug, comprising extrusion coating an electrical cable or plug with the composition of any of Embodiments 1-25.
Embodiment 27. An extrusion coated article comprising the composition of any of Embodiments 1-25.
Embodiment 28. An injection molded article comprising the composition of any of Embodiments 1-25.

### EXAMPLES

The examples of the compositions of the present invention, annotated hereinafter as "Ex." and their comparative examples, annotated hereinafter as "CE", employed the materials listed in Table 1. All weight percents employed in the examples are based on the weight percent of the entire composition except where stated otherwise.

**Table 1**

| Component | Trade name and Supplier |
|---|---|
| PPE | Poly(2,6-dimethyl-1,4-phenylene ether), CAS Reg. No. 24938-67-8, having an intrinsic viscosity of 0.46 deciliters per gram, measured in chloroform at 25° C., and obtained as PPO™ 646 resin from SABIC Innovative Plastics ("0.46 IV PPE"). |
| SEBS-I | A linear triblock polystyrene-poly(ethylene-butylene)-polystyrene copolymer, having a polystyrene count of about 37 to 44 weight percent and a number average molecular weight of 160,000 atomic mass units, supplied as an undusted powder from Kraton Performance Polymers, Inc. as Kraton™ A1536 HU and Kraton™ A1536 HS. Both the HS and HU formulations can be used, but the HU formulation was used in the following examples. |
| SEBS-II | A linear triblock polystyrene-poly(ethylene-butylene)-polystyrene copolymer, having a polystyrene content of 56.3-60.3% with 58% a mean value, supplied as an undusted powder from Kraton Performance Polymers, Inc. as Kraton™ A1535. |
| SEBS-IV | A linear triblock polystyrene-poly(ethylene-butylene)-polystyrene copolymer, CAS Reg. No. 66070-58-4, having a polystyrene content of 28.8-31.6, with a mean value of 30.2%, obtained from Kraton Performance Polymers, Inc as Kraton™ G1650. |
| SEBS-V | A melt-kneaded blend comprising about 35 weight percent polystyrene-poly(ethylene-butylene)-polystyrene, about 20 weight percent ethylene-propylene rubber, and about 45 weight percent mineral oil, obtained as TPE-SB2400 from Sumitomo Chemical Co. ("SEBS SB2400"). |
| PIB | A liquid polybutene, specifically a polyisobutene, having a number average molecular weight of about 800 AMU, obtained as Indopol™ H50 from INEOS Oligomers. |
| PP | Polypropylene homopolymer, CAS Reg. No. 9003-07-0, available from SABIC Innovative Plastics as 570P. |
| LLDPE | Linear low-density polyethylene, CAS Reg. No. 66070-58-4, available from Nippon Unicar Co. Ltd. as NUCG-5381. |
| POE-I | Ethylene-octene copolymer, CAS Reg. No. 26221-73-8, available from ExxonMobil Chemical Co. as Exact™ 8210. |
| POE-II | Maleic anhydride grafted ethylene-octene copolymer available from Dupont Corp. as Fusabond™ N493. |
| AlP | A flame retardant consisting of aluminum tris(diethyl phosphinate), available commercially from Clariant Intl. Ltd as EXOLIT™ OP 1230. |
| MPP | Melamine polyphosphate, CAS Reg. No. 218768-84-4, obtained from Chemische Fabrik Budenheim KG as Budit™ 3141. |
| BDADP | Bisphenol A bis(diphenyl phosphate), CAS Reg. No. 181028-79-5, commercially available from DAIHACHI Chemical Industry Co., Ltd. under the trade name of CR741. |
| Mg(OH)₂-I | Magnesium hydroxide, CAS Reg. No. 1309-32-8, was obtained from Kyowa Chemical Industry Co. as Kisuma™ 5A |
| Mg(OH)₂-II | Magnesium hydroxide, CAS Reg. No. 1309-32-8, was obtained from Albemarle Corp. as Magnifin™ H-5IV. |
| MgO | Magnesium oxide, CAS Reg. No. 1309-48-4, commercially available under the brand name Kyowa Mag from Kyowa Chemical Industry Co. Ltd.. |
| ZnS | Zinc sulfide, CAS Reg. No. 1314-98-3, was obtained from Sachtleben Chemie GmbH as Sachtolith™ HD. |
| Celloxide | (3'-4'-Epoxycyclohexane)methyl 3'-4'-epoxycyclohexyl-carboxylate, CAS Reg. No. 2386-87-0 obtained from Daicel, Inc. as Celloxide™ 2021P. |
| Tinuvin™ 234 | 2-(2H-benzotriazol-2-yl)-4,6-bis(1-methyl-1-phenylethyl)phenol, CAS Reg. No. 70321-86-17, obtained from BASF Corp. |
| Chiguard™ 5431 | 2,2' -Methylene bis(6-(2H-benzotriazol-2-yl)-4-, 1,1,3,3,tetramethylbutyl)phenol), CAS Reg. No. 103597-45-1, obtained from Chitec Technology Corp. |
| Cyasorb™ UV-3638 | 2,2'-(1,4-phenylene)bis[4H-3,1-benzoxazin-4-one], CAS Reg. No. 18600-59-4, obtained from Cytec Industries, Inc. |
| Uvinul™ 3030 | Pentaerythritol tetrakis(2-cyano-3,3-diphenylacrylate), CAS Reg. No. 17867-58-4, obtained from BASF Corp. |
| Uvinul™ 5050H | A sterically hindered amine oligomer, CAS Reg. No. 152261-33-1, obtained from BASF Corp. |
| Chimassorb™ 944 | Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]), CAS Reg. No. 71878-19-8, 70624-18-9, obtained from BASF Corp. |
| Tinuvin™ 770 | Bis(2,2,6,6,-tetramethyl-4-piperidyl)sebaceate, CAS. Reg. No. 52829-07-9, obtained from BASF Corp. |
| Tinuvin™ 622LD | Poly(4-hydroxy-2,2,6,6-tetramethyl-1-piperidine ethanol-alt-1,4-butanedioic acid), CAS Reg. No. 65447-77-0, obtained from BASF Corp. |
| Chiguard™ 622LD | Poly(4-hydroxy-2,2,6,6-tetramethyl-1-piperidine ethanol-alt-1,4-butanedioic acid), CAS Reg. No. 65447-77-0, obtained from Chitec Technology Corp. |
| Tinuvin™ 1577 | 2-(4,6-Diphenyl-1,3,5-triazin-2-yl)-5-hexyloxy-phenol, CAS Reg. No. 147315-50-2, obtained from BASF Corp. |
| Chiguard™ 1064 | 2-[4,6-bis(2,4-dimethylphenyl)-1,3,5-triazin-2-yl]-5-(octyloxy)phenol, CAS Reg. No. 2725-22-6, obtained from Chitec Technology Corp. |
| AO-I | Stearyl-3-(3'5'-di-t-butyl-4-hydroxyphenyl) propionate, CAS Reg. No. 2082-79-3, commercially available under the trade name Irganox™ 1076 from BASF Corp. |
| AO-II | Tetrakis(2,4-di-tert-butylphenyl)-4,4-biphenyldiphosphonite, CAS Reg. No. 38613-77-3, commercially available under the trade name of Hostanox™ P-EPQ from Clariant Intl. Ltd. |
| MD | 2',3-bis[[3-[3,5-di-tert-butyl-4-hydroxyphenyl]propionyl] propionohydrazide, CAS Reg. No. 32687-78-8, commercially available under the trade name Irganox™ MD 1024 from BASF Corp. |
| Erucamide | Erucamide, CAS Reg. No. 112-84-5, was obtained from Crompton Corporation as Kemamide™ E Ultra.. |
| Fragrance | A polyethylene-encapsulated fragrance obtained from International Flavors and Fragrances, Inc. as IFI-7191 PBD TUTTI FRUITY. |
| TiO₂-I | Titanium dioxide having an average particle size of 0.2 micrometers was obtained from DuPont Corp. as Ti-Pure™ R103-15. |
| TiO2-II | Titanium dioxide having an average particle size of 0.2 micrometers was obtained from Huntsman International LLC as TIOXIDE™ R-TC30. |
| Carbon Black | Carbon black having an iodine absorption of 231 grams per kilogram determined according to ASTM D1510-02a was obtained from Cabot Corp. as Monarch™ 800. |
| Pigment Blue 29 | Na₆Al₄Si₆S₄O₂₀ (Ultramirine Blue), CAS Reg. No. 57455-37-5, obtained as Ultramarine 5085 from Holiday Pigments Ltd. |
| Pigment Red 101 | Fe₂O₃ (Ferric Oxide), CAS Reg. No. 1309-37-1, obtained as ColorTherm™ Red 180 M from Lanxess Inorganic Pigments |

### Method

The compositions and comparative examples were prepared by compounding on a 37mm Toshiba SE twin screw extruder (Toshiba TSE 37BS). The liquid flame retardant was fed by a side feeder. All other materials were blended together and fed by the main feeder. The strand of composite was cut into pellets and dried for further molding and wire extrusion operation. The testing was conducted on pellets, molded parts, and extruded wires.

Wire samples were extruded on a Wai Tak Lung Machinery Co. extruder (WTL EXL50) with melt temperature at 240 °C without pre-heating of the copper conductor. The line speed was set at 70 m/min. The wire configuration was AWG24 copper conductor with a coating thickness of 0.74 mm.

The compounding conditions that were used are summarized in Table 2.

**Table 2**

| Parameters | Unit | Set Values |
|---|---|---|
| Zone 1 Temp | °C | 50 |
| Zone 2 Temp | °C | 180 |
| Zone 3 Temp | °C | 225 |
| Zone 4 Temp | °C | 245 |
| Zone 5 Temp | °C | 245 |
| Zone 6 Temp | °C | 245 |
| Zone 7 Temp | °C | 245 |
| Zone 8 Temp | °C | 245 |
| Zone 9 Temp | °C | 245 |
| Zone 10 Temp | °C | 245 |
| Zone 11 Temp | °C | 245 |
| Die Temp | °C | 255 |
| Screw speed | Rpm | 400 |
| Throughput | kg/hr | 35 |

The molding conditions that were used are summarized in Table 3.

**Table 3**

| Parameters | Unit | Set Values |
|---|---|---|
| Pre-drying time | Hour | 4 |
| Pre-drying temp | °C | 80 |
| Hopper temp | °C | 50 |
| Zone 1 temp | °C | 235 |
| Zone 2 temp | °C | 250 |
| Zone 3 temp | °C | 250 |
| Nozzle temp | °C | 245 |
| Mold temp | °C | 40 |
| Screw speed | Rpm | 100 |
| Back pressure | Kgf/cm² | 90 |
| Decompression | Mm | 6 |
| Injection time | S | 2 |
| Holding time | S | 8 |
| Cooling time | S | 20 |
| Shot volume | Mm | 58 |
| Switch point | Mm | 10 |
| Injection speed | mm/s | 25 |
| Holding pressure | Kgf/cm² | 600 |
| Cushion | Mm | 4 |

### Testing

The ASTM and UL tests used to characterize the compositions of the examples and the comparative examples, are summarized below in Table 4.

**Table 4**

| Test | Description |
|---|---|
| Stain Test ("Stain Rating") | A United States copper penny was clamped on to a composite chip and the chip was placed in an oven at 60 °C and with 90 percent relative humidity (RH) for 72 hr. The surface of chip that contacted the penny coin was checked to see whether there was any stain. The stain was rated 1-5 (1=no staining; 5=very remarkable staining). Suitable compositions of the present invention have a stain rating of 1 or 2, where a score of "1" means no stain and a score of "2" means "substantially stain-free" (substantially stainless). |
| Delta E (ΔE) after Heat Aging | A composite chip was placed in an oven at 113 °C for 168 hr. The color data of the sample before and after aging was measured to calculate the color shift delta E. Suitable compositions of the present invention have a color shift of 3 or less. |
| Delta E (ΔE) after UV Weathering | ASTM D 4459. The total UV weathering time was 100-400 hours and color of the composite chip was measured every 100 hours. Suitable compositions of the present invention have a 300 hour color shift of 12 or less. |
| Color | ASTM D 2244. The color L, a, b values under a D65 or CWF_2 light source were recorded for determining CIELAB color shifts (ΔE). |
| VW-1 | UL 1581. A single wire was tested. |
| Flame Testing | UL 94. The test specimens were aged at 23 °C, 50 percent relative humidity (RH) for more than 2 days (d) before testing. |
| Flexural Modulus | ASTM D 790. The span was 100 mm and the test speed was 12.5 millimeters/minute (mm/min). |
| Shore A Hardness | ASTM D 2240. The test specimen was two overlapped color chips with overall thickness of 6.4 mm and the hardness data was read at 30 seconds (s). |
| Heat Deformation | UL 1581. The test condition was 100 °C, 1hr with 250 g loading. |

### Results

Tables 5-9, provided below, summarize the testing results for Comparative Examples and Examples of compositions of the present invention.

**Table 5**

| Formulas/Compo nents | CE1 | CE2 | Ex1 | Ex2 | Ex3 | Ex4 | Ex5 | Ex6 | Ex7 |
|---|---|---|---|---|---|---|---|---|---|
| Anti-UV Agents | | | | | | | | | |
| Tinuvin™ 234 | 1.82 | | | | | | | | |
| Tinuvin™ 622LD | | 1.82 | | | | | | | |
| Tinuvin™ 1577 | | | 1.82 | | | | | | |
| Chiguard™ 1064 | | | | 2.71 | 2.71 | 2.71 | 3.58 | 2.74 | 1.84 |
| Other Components | | | | | | | | | |
| PPE | 23.69 | 23.69 | 23.69 | 23.48 | 20.77 | 18.06 | 23.27 | 21.01 | 21.2 |
| SEBS-I | | | | | | | | 23.75 | 23.97 |
| SEBS-IV | 10.93 | 10.93 | 10.93 | 10.84 | 10.84 | 10.84 | 10.74 | | |
| SEBS-V | | | | | | | | 12.79 | 12.91 |
| PIB | 4.56 | 4.56 | 4.56 | 4.51 | 4.51 | 4.51 | 4.47 | 7.31 | 7.38 |
| Mg(OH)₂-II | 27.34 | 27.34 | 27.34 | 27.09 | 29.8 | 32.51 | 26.85 | | |
| A1P | | | | | | | | 4.57 | 4.61 |
| MPP | | | | | | | | 5.48 | 5.53 |
| BPADP | | | | | | | | 9.13 | 9.22 |
| PP | | | | | | | | 7.31 | 7.38 |
| POE-I | 17.31 | 17.31 | 17.31 | 17.16 | 17.16 | 17.16 | 17 | | |
| POE-II | 4.56 | 4.56 | 4.56 | 4.51 | 4.51 | 4.51 | 4.47 | | |
| LLDPE | 2.73 | 2.73 | 2.73 | 2.71 | 2.71 | 2.71 | 2.68 | | |
| TiO2-II | 5.65 | 5.65 | 5.65 | 5.6 | 5.6 | 5.6 | 5.55 | 4.57 | 4.61 |
| Pigment Blue 29 | 0.088 | 0.088 | 0.088 | 0.088 | 0.088 | 0.088 | 0.087 | 0.072 | 0.073 |
| Pigment Red 101 | 0.046 | 0.046 | 0.046 | 0.046 | 0.046 | 0.046 | 0.046 | 0.032 | 0.032 |
| AO-I | 0.68 | 0.68 | 0.68 | 0.68 | 0.68 | 0.68 | 0.67 | 0.69 | 0.69 |
| AO-II | 0.23 | 0.23 | 0.23 | 0.23 | 0.23 | 0.23 | 0.22 | 0.23 | 0.23 |
| MD | 0.09 | 0.09 | 0.09 | 0.09 | 0.09 | 0.09 | 0.09 | 0.09 | 0.09 |
| Erucamide | 0.27 | 0.27 | 0.27 | 0.27 | 0.27 | 0.27 | 0.27 | 0.18 | 0.18 |
| Fragrance | | | | | | | | 0.055 | 0.055 |
| Stain Rating | 5 | 1 | 2 | 2 | 2 | 2 | 2 | 2 | 2 |
| ΔE (Heat Aging) | ND | ND | ND | ND | ND | ND | ND | ND | ND |
| ΔE (300 hr UV) | 16.2 | 23.7 | 5.5 | 2.5 | 1.8 | 1.7 | 1.1 | 1.66 | 2.71 |
| Flex. Modulus MPa | 44.9 | 47 | 51.1 | 43 | 38.8 | 35.9 | 74.4 | ND | ND |
| Shore A Hardness | 88 | 89.5 | 87.7 | 88.5 | 88 | 87.5 | 89.5 | 82.3 | 82.3 |
| Heat Deformation % | 19.3 | 17.9 | 18.2 | 13.7 | 13.2 | 23 | 23.3 | 23.7 | 22.9 |
| VW-1 | ND | ND | ND | ND | ND | ND | ND | Pass | Pass |

**Table 6**

| | CE3 | CE4 | CE5 | CE6 | CE7 | CE8 |
|---|---|---|---|---|---|---|
| Anti-UV Agents | | | | | | |
| Tinuvin™ 234 | 1.83 | | | | | 1.79 |
| Chiguard™ 5431 | | 1.83 | | | | |
| Uvinul™ 5050H | | | 1.83 | | | |
| Tinuvin™ 7070 | | | | 1.83 | | |
| Chimassorb™ 944 | | | | | 1.83 | |
| Tinuvin™ 622LD | | | | | | 1.79 |
| Celloxide | 0.3 | 0.3 | 0.3 | 0.3 | 0.3 | |
| PPE | 24.8 | 24.8 | 24.8 | 24.8 | 24.8 | 23.27 |
| SEBS-I | 19.7 | 19.7 | 19.7 | 19.7 | 19.7 | |
| SEBS-IV | | | | | | 10.74 |
| SEBS- V | 15.6 | 15.6 | 15.6 | 15.6 | 15.6 | |
| PIB | 7.8 | 7.8 | 7.8 | 7.8 | 7.8 | 4.47 |
| Mg(OH)₂-I | 5.5 | 5.5 | 5.5 | 5.5 | 5.5 | |
| Mg(OH)₂-II | | | | | | 26.85 |
| A1P | | | | | | |
| MPP | 9.17 | 9.17 | 9.17 | 9.17 | 9.17 | |
| BPADP | 9.17 | 9.17 | 9.17 | 9.17 | 9.17 | |
| PP | | | | | | |
| POE-I | | | | | | 17 |
| POE-II | | | | | | 4.47 |
| LLDPE | | | | | | 2.68 |
| TiO2-I | 4.383 | 4.383 | 4.383 | 4.383 | 4.383 | |
| TiO2-II | | | | | | 5.55 |
| Carbon Black | 0.004 | 0.004 | 0.004 | 0.004 | 0.004 | |
| Pigment Blue 29 | 0.065 | 0.065 | 0.065 | 0.065 | 0.065 | 0.087 |
| Pigment Red 101 | 0.033 | 0.033 | 0.033 | 0.033 | 0.033 | 0.046 |
| AO-I | 0.69 | 0.69 | 0.69 | 0.69 | 0.69 | 0.67 |
| AO-II | 0.073 | 0.073 | 0.073 | 0.073 | 0.073 | 0.22 |
| MD | 0.09 | 0.09 | 0.09 | 0.09 | 0.09 | 0.09 |
| MgO | 0.14 | 0.14 | 0.14 | 0.14 | 0.14 | |
| ZnS | 0.14 | 0.14 | 0.14 | 0.14 | 0.14 | |
| Erucamide | 0.46 | 0.46 | 0.46 | 0.46 | 0.46 | 0.27 |
| Fragrance | 0.055 | 0.055 | 0.055 | 0.055 | 0.055 | |
| Stain Rating | 5 | 5 | 4 | 3 | 2 | 5 |
| ΔE (Heat Aging) | 0.9 | 0.9 | 15 | 11.6 | 12.6 | ND |
| ΔE (300 hr UV) | ND | ND | ND | ND | 5.6 | 16.2 |
| Flex. Modulus MPa | 161 | 143 | 148 | 144 | 93.7 | 47.6 |
| Shore A Hardness | 84.1 | 83.6 | 82.5 | 82.8 | 81 | 87.8 |
| UL94 (4mm) | V-0 | V-0 | V-0 | V-0 | V-0 | ND |
| Heat Deformation % | 19.5 | 15.6 | 13.8 | 20.3 | 15.4 | 20.9 |
| VW-1 | Pass | Pass | Pass | Pass | Pass | ND |

**Table 7**

| | CE9 | Ex8 | Ex9 | Ex10 | Ex11 | Ex12 | Ex13 | Ex14 |
|---|---|---|---|---|---|---|---|---|
| Anti-UV Agents | | | | | | | | |
| Cyasorb™ UV-3638 | 1.83 | | | | | | | |
| Uvinul™ 3030 | | 1.83 | | | | | | |
| Tinuvin™ 622LD | | | 1.83 | | | | 1.79 | |
| Chiguard™ 622LD | | | | | | | | 0.89 |
| Tinuvin™ 1577 | | | | 1.83 | | | 1.79 | |
| Chiguard™ 1064 | | | | | 1.93 | 1.76 | | 2.68 |
| Celloxide | 0.3 | 0.3 | 0.3 | 0.3 | 0.48 | 0.45 | | |
| PPE | 24.8 | 24.8 | 24.8 | 24.8 | 22.15 | 20.27 | 23.27 | 23.27 |
| SEBS- I | 19.7 | 19.7 | 19.7 | 19.7 | 23.36 | 22.92 | | |
| SEBS- IV | | | | | | | 10.74 | 10.74 |
| SEBS- V | 15.6 | 15.6 | 15.6 | 15.6 | 12.58 | 12.34 | | |
| PIB | 7.8 | 7.8 | 7.8 | 7.8 | 6.29 | 6.17 | 4.47 | 4.47 |
| Mg(OH)₂-I | 5.5 | 5.5 | 5.5 | 5.5 | | | | |
| Mg(OH)₂-II | | | | | | | 26.85 | 26.85 |
| A1P | | | | | 4.49 | 4.41 | | |
| MPP | 9.17 | 9.17 | 9.17 | 9.17 | 5.39 | 5.29 | | |
| BPADP | 9.17 | 9.17 | 9.17 | 9.17 | 9.88 | 9.7 | | |
| PP | | | | | 7.19 | 7.05 | | |
| POE-I | | | | | | | 17 | 17 |
| POE-II | | | | | | | 4.47 | 4.47 |
| LLDPE | | | | | | | 2.68 | 2.68 |
| TiO2-I | 4.383 | 4.383 | 4.383 | 4.383 | | | | |
| TiO2-II | | | | | 6.53 | 8.24 | 5.55 | 5.55 |
| Carbon Black | 0.004 | 0.004 | 0.004 | 0.004 | | | | |
| Pigment Blue 29 | 0.065 | 0.065 | 0.065 | 0.065 | 0.093 | 0.14 | 0.087 | 0.087 |
| Pigment Red 101 | 0.033 | 0.033 | 0.033 | 0.033 | 0.052 | 0.087 | 0.046 | 0.046 |
| AO-I | 0.69 | 0.69 | 0.69 | 0.69 | 0.67 | 0.66 | 0.67 | 0.67 |
| AO-II | 0.073 | 0.073 | 0.073 | 0.073 | 0.22 | 0.22 | 0.22 | 0.22 |
| MD | 0.09 | 0.09 | 0.09 | 0.09 | 0.09 | 0.09 | 0.09 | 0.09 |
| MgO | 0.14 | 0.14 | 0.14 | 0.14 | | | | |
| ZnS | 0.14 | 0.14 | 0.14 | 0.14 | | | | |
| Erucamide | 0.46 | 0.46 | 0.46 | 0.46 | 0.18 | 0.18 | 0.27 | 0.27 |
| Fragrance | 0.055 | 0.055 | 0.055 | 0.055 | 0.054 | 0.053 | | |
| Stain Rating | 2 | 2 | 1 | 2 | 2 | 2 | 2 | 2 |
| ΔE (Heat Aging) | 0.6 | 1.1 | 1.5 | 1.1 | ND | ND | ND | ND |
| ΔE (300 hr UV Weathering | 16.0 | 6.7 | 4.0 | 0.7 | 1.9 | 1.5 | 4.9 | 1.7 |
| Flexural Modulus MPa | 317 | 224 | 160 | 148 | 96 | 95 | 53.9 | 43.7 |
| Shore A Hardness | 87.3 | 86.3 | 84.2 | 83.6 | 83.6 | 84.6 | 87.7 | 88.7 |
| UL94 (4mm) | V-0 | V-0 | V-0 | V-0 | ND | ND | ND | ND |
| Heat Deformation % | 15.1 | 9.9 | 9.6 | 16.4 | 22.4 | 18.4 | 23.3 | 18.5 |
| VW-1 | Pass | Pass | Pass | Pass | Pass | Pass | ND | ND |

**Table 8**

| | CE10 | CE11 | CE12 | CE13 | CE14 |
|---|---|---|---|---|---|
| Anti-UV Agents | | | | | |
| Tinuvin™ 234 | 0.91 | 0.91 | | | |
| Uvinul™ 3030 | | | 0.91 | | |
| Cyasorb™ UV-3638 | | | | 0.91 | 0.91 |
| Tinuvin™ 1577 | | | | | |
| Chiguard™ 1064 | | | | | |
| Chimassorb™ 944 | | | 0.91 | | 0.91 |
| Tinuvin™ 622LD | 0.91 | | | 0.91 | |
| Chiguard™ 622LD | | 0.91 | | | |
| Celloxide | 0.46 | 0.46 | 0.3 | 0.3 | 0.3 |
| PPE | 20.1 | 20.1 | 24.8 | 24.8 | 24.8 |
| SEBS- I | 21.02 | 21.02 | 19.7 | 19.7 | 19.7 |
| SEBS- V | 15.54 | 15.54 | 15.6 | 15.6 | 15.6 |
| PIB | 7.3 | 7.3 | 7.8 | 7.8 | 7.8 |
| Mg(OH)₂-I | | | 5.5 | 5.5 | 5.5 |
| A1P | 4.58 | 4.58 | | | |
| MPP | 4.58 | 4.58 | 9.17 | 9.17 | 9.17 |
| BPADP | 11 | 11 | 9.17 | 9.17 | 9.17 |
| PP | 7.3 | 7.3 | | | |
| TiO2-I | | | 4.383 | 4.383 | 4.383 |
| TiO2-II | 4.96 | 4.96 | | | |
| Carbon Black | 0.00003 | 0.00003 | 0.004 | 0.004 | 0.004 |
| Pigment Blue 29 | 0.09 | 0.09 | 0.065 | 0.065 | 0.065 |
| Pigment Red 101 | 0.001 | 0.001 | 0.033 | 0.033 | 0.033 |
| AO-I | 0.69 | 0.69 | 0.69 | 0.69 | 0.69 |
| AO-II | 0.23 | 0.23 | 0.073 | 0.073 | 0.073 |
| MD | 0.09 | 0.09 | 0.09 | 0.09 | 0.09 |
| MgO | | | 0.14 | 0.14 | 0.14 |
| ZnS | | | 0.14 | 0.14 | 0.14 |
| Erucamide | 0.18 | 0.18 | 0.46 | 0.46 | 0.46 |
| Fragrance | 0.05 | 0.05 | 0.055 | 0.055 | 0.055 |
| Stain Rating | 5 | 5 | ND | ND | ND |
| ΔE (Heat Aging) | 1.9 | 2.1 | 6.7 | 1.2 | 10.6 |
| ΔE (300 hr UV Weathering | 1.4 | 1.4 | 5.5 | 12.9 | 11.7 |
| Flexural Modulus MPa | 81.7 | 92.8 | 141 | 169 | 156 |
| Shore A Hardness | 84.3 | 85.5 | 84 | 85.2 | 83.9 |
| UL94 (4mm) | V-0 | V-0 | V-0 | V-0 | V-0 |
| % Heat Deformation | 14.1 | 14.0 | 14.1 | 8.5 | 14.2 |
| VW-1 | Pass | Pass | Pass | Pass | Pass |

**Table 9**

| | Ex15 | Ex16 | Ex17 | Ex18 | Ex19 |
|---|---|---|---|---|---|
| Anti-UV Agents | | | | | |
| Tinuvin™ 234 | | | | | |
| Uvinul™ 3030 | 0.91 | | | | |
| Tinuvin™ 1577 | | 0.91 | 0.91 | 0.91 | |
| Chiguard™ 1064 | | | | | 0.91 |
| Tinuvin™ 622LD | 0.91 | 0.91 | 0.91 | | |
| Chiguard™ 622LD | | | | 0.91 | 0.91 |
| Celloxide | 0.3 | 0.3 | 0.46 | 0.46 | 0.46 |
| PPE | 24.8 | 24.8 | 20.1 | 20.1 | 20.1 |
| SEBS- I | 19.7 | 19.7 | 21.02 | 21.02 | 21.02 |
| SEBS- V | 15.6 | 15.6 | 15.54 | 15.54 | 15.54 |
| PIB | 7.8 | 7.8 | 7.3 | 7.3 | 7.3 |
| Mg(OH)₂-I | 5.5 | 5.5 | | | |
| A1P | | | 4.58 | 4.58 | 4.58 |
| MPP | 9.17 | 9.17 | 4.58 | 4.58 | 4.58 |
| BPADP | 9.17 | 9.17 | 11 | 11 | 11 |
| PP | | | 7.3 | 7.3 | 7.3 |
| TiO2-I | 4.383 | 4.383 | | | |
| TiO2-II | | | 4.96 | 4.96 | 4.96 |
| Carbon Black | 0.004 | 0.004 | 0.00003 | 0.00003 | 0.00003 |
| Pigment Blue 29 | 0.065 | 0.065 | 0.09 | 0.09 | 0.09 |
| Pigment Red 101 | 0.033 | 0.033 | 0.001 | 0.001 | 0.001 |
| AO-I | 0.69 | 0.69 | 0.69 | 0.69 | 0.69 |
| AO-II | 0.73 | 0.73 | 0.23 | 0.23 | 0.23 |
| MD | 0.09 | 0.09 | 0.09 | 0.09 | 0.09 |
| MgO | 0.14 | 0.14 | | | |
| ZnS | 0.14 | 0.14 | | | |
| Erucamide | 0.46 | 0.46 | 0.18 | 0.18 | 0.18 |
| Fragrance | 0.055 | 0.055 | 0.05 | 0.05 | 0.05 |
| Stain Rating | ND | ND | 2 | 2 | 2 |
| ΔE (Heat Aging) | 1.4 | 1.6 | 2.1 | 2.1 | 2.2 |
| ΔE (300 hr UV Weathering | 4.5 | 1.7 | 1.7 | 1.6 | 1.7 |
| Flexural Modulus MPa | 186 | 191 | 86.9 | 73.7 | 68.6 |
| Shore A Hardness | 85.4 | 85.5 | 83.4 | 83.2 | 82.7 |
| UL94 (4mm) | V-0 | V-0 | V-0 | V-0 | V-0 |
| % Heat Deformation | 13.0 | 14.1 | 14.7 | 14.5 | 12.7 |
| VW-1 | Pass | Pass | Pass | Pass | Pass |

Heat and Humidity Aging ("Stain") Test. Typically, a sample of the composition (a chip) is molded from the compositions containing anti-UV agents, but not containing a trisaryl-1,3,5-triazine, yielded unacceptable stain test results (yellowing), scoring higher than a "2", thus showing perceptible staining. Those chips prepared from the compositions of Comparative Examples CE3, CE4 and CE10, each which contained a benzotriazole-type UV absorber (Tinuvin 234 or Chiguard 5431), exhibited the worst staining degree of staining, scoring a "5". The chips molded from the compositions of the present invention, that were stain tested and which contained a tris-aryl-1,3,5-triazine-type UV stabilizer, provided the best stain test results, all scoring "2", which indicated that they remained "substantially stain free" under the test conditions. The only other compositions tested which scored equally well were compositions containing a combination of a cycloaliphatic epoxy with poly(4-hydroxy-2,2,6,6-tetramethyl-1-piperidine ethanol-alt-1,4-butanedioic acid) (Tinuvin or Chiguard 622LD) (Ex9).

Heat Aging Test. Chips molded from the compositions of the present invention and comparative examples typically had color shift of 3 or less with the exception of those containing the HALS anti-UV agents Uvinul 5050H, Tinuvin 770 and Chimassorb 944.

UV Weathering Test. Chips molded from the compositions, and comparative examples, typically exhibited a color shift of 3 or less. Thus, based on the results of these tests, those chips prepared from the compositions of those which contained a benzotriazole-type UV absorber exhibited the worst combination of test results while the chips, molded from the compositions of the present invention, that were stain tested and which contained a tris-aryl-1,3,5-triazine-type UV stabilizer, provided the best combination of test results.

## Claims

1. A polymer composition, comprising:
(a) 10 to 45 weight percent of a poly(phenylene ether);
(b) 5 to 65 weight percent of a hydrogenated block copolymer of an alkenyl aromatic compound and a conjugated diene;
(c) 0 to 20 weight percent of a polybutene;
(d) 2 to 60 weight percent of a flame retardant;
(e) 0.1 to 20 weight percent of an anti-UV agent wherein the agent comprises a trisaryl-1,3,5-triazine;
(f) 0 to 50 weight percent of a copolymer of ethylene and a C₃-C₁₂ alpha-olefin; and
(g) 0 to 30 weight percent of a polyolefin homopolymer;
wherein the polymer composition does not contain a benzotriazole-type UV absorber, wherein all weight percents are based on the total weight of the composition, and
wherein an article made from the composition:
(i) is substantially stainless, wherein staining is evaluated using the "Copper Penny Test", wherein a United States copper penny is clamped on a sample of the composition, the sample is placed in an oven at 60 °C with 90 percent relative humidity (RH) for 72 hours, the surface of the sample that is contacted with the penny is checked for staining, staining is rated on a scale of 1 to 5 (1=no staining; 5=very remarkable stain), and the composition has a stain rating of 1 or 2, where a score of "1" means no stain and a score of "2" means "substantially stainless";
(ii) exhibits a CIELAB color shift (ΔE) of 3 or less after 168 hours of heat exposure at 75 °C; and
(iii) exhibits a CIELAB color shift (ΔE) of 12 or less after 300 hours of xenon arc exposure according to ASTM D 4459.

2. The composition of claim 1, wherein the anti-UV agent comprises a trisaryl-1,3,5-triazine with (i) a cycloaliphatic epoxy or hindered amine light stabilizer; or (ii) a combination of a cycloaliphatic epoxy and a hindered amine light stabilizer.

3. The composition of claim 1 or 2 wherein the trisaryl-1,3,5-triazine comprises 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof.

4. The composition of claim 1 or 3 wherein the anti-UV agent further comprises a cycloaliphatic epoxy UV stabilizer.

5. The composition of claim 1, comprising:
(a) 15 to 35 weight percent of a poly(phenylene ether);
(b) 30 to 50 weight percent of a combination of two or more hydrogenated block polymers of an alkenyl aromatic compound and a conjugated diene;
(c) 2 to 20 weight percent of a polybutene copolymer;
(d) 15 to 40 weight percent of a flame retardant comprising melamine polyphosphate and a metal dialkyl phosphinate;
(e) 0.1 to 20 weight percent of an anti-UV agent wherein the agent comprises a trisaryl-1,3,5-triazine; and
(f) 2 to 20 weight percent of a polypropylene homopolymer,
wherein an article made from the composition exhibits a CIELAB color shift (ΔE) of 5 or less after 300 hours of xenon arc exposure according to ASTM D 4459.

6. The composition of claim 5, wherein the trisaryl-1,3,5-triazine comprises 2-(4,6-diphenyl-1,3,5-triazin-2-yl)-5-hexyloxy-phenol, 2-[4,6-bis(2,4-dimethyl-phenyl)-1,3,5-triazin-2-yl]-5-(octyloxy)phenol, or a combination thereof.

7. The composition of claim 5 or 6, wherein the anti-UV agent further comprises (3'-4'-epoxycyclohexane)methyl 3'-4'-epoxycyclohexyl-carboxylate.

8. The composition of claim 5-7, wherein the flame retardant comprises 40 to 60 weight percent bisphenol A bis(diphenyl phosphate), 20 to 30 weight percent melamine polyphosphate and 20 to 30 weight percent of aluminum diethylphosphinate, based on the total weight percent of the flame retardant used.

9. The composition of claim 1, comprising:
(a) 15 to 30 weight percent of a poly(2,6-dimethyl-1,4-phenylene ether) having an intrinsic viscosity of 0.3 to 0.6 deciliter per gram measured in chloroform at 25 °C;
(b) 30 to 45 weight percent of a combination of two or more hydrogenated block
copolymers of an alkenyl aromatic compound and a conjugated diene;
(c) 5 to 10 weight percent of a polybutene;
(d) 2 to 10 weight percent of bisphenol A bis(diphenyl phosphate);
(e) 2 to 10 weight percent of melamine polyphosphate;
(f) 5 to 20 weight percent of aluminum diethylphosphinate;
(g) 0.1 to 10 weight percent of an anti-UV agent wherein the agent comprises 2-(4,6-diphenyl-1,3,5-triazin-2-yl)-5-hexyloxy-phenol;
(h) 5 to 10 weight percent of a polypropylene homopolymer; and
(i) 4 to 20 weight percent of titanium dioxide.

10. The composition of claim 1, comprising:
(a) 15 to 35 weight percent of a poly(phenylene ether);
(b) 5 to 30 weight percent of a hydrogenated block copolymer of an alkenyl aromatic compound and a conjugated diene;
(c) 2 to 20 weight percent of a polybutene;
(d) 15 to 50 weight percent of a magnesium hydroxide flame retardant;
(e) 0.1 to 10 weight percent of an anti-UV agent wherein the agent comprises trisaryl-1,3,5-triazine; and
(f) 5 to 40 weight percent of a copolymer of ethylene and a C₃-C₁₂ alpha-olefin,
wherein an article made from the composition exhibits a CIELAB color shift (ΔE) of 5 or less after 300 hours of xenon arc exposure according to ASTM D 4459.

11. The composition of claim 10, wherein the flame retardant comprises a coated magnesium hydroxide.

12. The composition of claim 11, wherein the magnesium hydroxide is coated with an amino silane.

13. The composition of any of claims 9-12 wherein the polybutene is a isobutene-butene copolymer having a number average molecular weight of about 800 atomic mass units.

14. The polymer composition of claim 1, comprising:
(a) 10 to 45 weight percent of a poly(phenylene ether);
(b) 5 to 65 weight percent of a hydrogenated block copolymer of an alkenyl aromatic compound and a conjugated diene;
(c) 0 to 20 weight percent of a polybutene;
(d) 2 to 60 weight percent of a flame retardant;
(e) 0.1 to 20 weight percent of an anti-UV agent wherein said agent comprises a trisaryl-1,3,5 -triazine with:
(i) a cycloaliphatic epoxy or poly(4-hydroxy-2,2,6,6-tetramethyl-1-piperidine ethanol-alt-1,4-butanedioic acid); or
(ii) a combination of a cycloaliphatic epoxy and poly(4-hydroxy-2,2,6,6-tetramethyl-1-piperidine ethanol-alt-1,4-butanedioic acid);
(f) 0 to 50 weight percent of a copolymer of ethylene and a C₃-C₁₂ alpha-olefin; and
(g) 0 to 30 weight percent of a polyolefin homopolymer,
wherein said polymer composition does not contain a benzotriazole-type UV absorber, wherein all weight percents are based on the total weight of the composition, and wherein an article made from the composition:
(i) is substantially stainless;
(ii) exhibits a CIELAB color shift, (ΔE) of 3 or less after 168 hours of heat exposure at 75 °C; and
(iii) exhibits a CIELAB color shift, (ΔE) of 12 or less after 300 hours of xenon arc exposure according to ASTM D 4459.

15. An extrusion coated article comprising the composition of any of claims 1-14.

## Patentansprüche

1. Polymerzusammensetzung, umfassend:
(a) 10 bis 45 Gewichtsprozent eines Poly(phenylenether)s;
(b) 5 bis 65 Gewichtsprozent eines hydrierten Block-Copolymers einer alkenylaromatischen Verbindung und eines konjugierten Diens;
(c) 0 bis 20 Gewichtsprozent eines Polybutens;
(d) 2 bis 60 Gewichtsprozent eines Flammschutzmittels;
(e) 0,1 bis 20 Gewichtsprozent eines Anti-UV-Mittels, wobei das Mittel ein Trisaryl-1,3,5-triazin, umfasst;
(f) o bis 50 Gewichtsprozent eines Copolymers von Ethylen und einem C₃-C₁₂-Alpha-Olefin; und
(g) o bis 30 Gewichtsprozent eines Polyolefin-Homopolymers;
wobei die Polymerzusammensetzung nicht einen UV-Absorber vom Benzotriazol-Typ enthält, wobei alle Gewichtsprozentangaben auf das Gesamtgewicht der Zusammensetzung bezogen sind, und wobei ein aus der Zusammensetzung hergestellter Gegenstand:
(i) im Wesentlichen nicht verfärbt bzw. nichtrostend ist, wobei eine Verfärbung unter Verwendung des "Kupfer-Penny-Tests" ("Copper Penny Test") bewertet wird, wobei ein Kupfer-Penny der Vereinigten Staaten auf eine Probe der Zusammensetzung geklemmt wird, die Probe in einen Ofen bei 60 °C mit 90 Prozent relativer Feuchtigkeit (RH) für 72 Stunden gebracht wird, die Oberfläche der Probe, die mit dem Penny in Kontakt ist, auf Verfärbung geprüft wird, eine Verfärbung auf einer Skala von 1 bis 5 bewertet wird (1 = keine Verfärbung; 5 = sehr starke Verfärbung), und die Zusammensetzung eine Verfärbungsbewertung von 1 oder 2 aufweist, wobei eine Punktzahl von "1" keine Verfärbung bedeutet und eine Punktzahl von "2" "im Wesentlichen nicht verfärbt" bzw. "im Wesentlichen nichtrostend" bedeutet;
(ii) eine CIELAB-Farbverschiebung (ΔE) von 3 oder weniger nach 168-stündiger Wärmeeinwirkung bei 75 °C zeigt; und
(iii) eine CIELAB-Farbverschiebung (ΔE) von 12 oder weniger nach 300-stündiger Belichtung mit Xenon-Bogenlicht gemäß ASTM D 4459 zeigt.

2. Zusammensetzung nach Anspruch 1, wobei das Anti-UV-Mittel ein Trisaryl-1,3,5-triazin mit (i) einem cycloaliphatischen Epoxy oder einem gehinderten Amin-Lichtstabilisator; oder (ii) einer Kombination von einem cycloaliphatischen Epoxy und einem gehinderten Amin-Lichtstabilisator umfasst.

3. Zusammensetzung nach Anspruch 1 oder 2, wobei das Trisaryl-1,3,5,-triazin 2-(4,6-Diphenyl-1,3,5-triazin-2-yl)-5-hexyloxyphenol, 2-[4,6-Bis(2,4-dimethylphenyl)-1,3,5-triazin-2-yl]-5-(octyloxy)phenol, oder eine Kombination davon umfasst.

4. Zusammensetzung nach Anspruch 1 oder 3, wobei das Anti-UV-Mittel weiterhin einen cycloaliphatischen Epoxy-UV-Stabilisator umfasst.

5. Zusammensetzung nach Anspruch 1, umfassend:
(a) 15 bis 35 Gewichtsprozent eines Poly(phenylenether)s;
(b) 30 bis 50 Gewichtsprozent einer Kombination von zwei oder mehr hydrierten Block-Polymeren einer alkenylaromatischen Verbindung und eines konjugierten Diens;
(c) 2 bis 20 Gewichtsprozent eines Polybuten-Copolymers;
(d) 15 bis 40 Gewichtsprozent eines Flammschutzmittels, das Melaminpolyphosphat und ein Metalldialkylphosphinat umfasst;
(e) 0,1 bis 20 Gewichtsprozent eines Anti-UV-Mittels, wobei das Mittel ein Trisaryl-1,3,5-triazin umfasst; und
(f) 2 bis 20 Gewichtsprozent eines Polypropylen-Homopolymers,
wobei ein aus der Zusammensetzung hergestellter Gegenstand eine CIELAB-Farbverschiebung (ΔE) von 5 oder weniger nach 300-stündiger Belichtung mit Xenon-Bogenlicht gemäß ASTM D 4459 zeigt.

6. Zusammensetzung nach Anspruch 5, wobei das Trisaryl-1,3,5-triazin 2-(4,6-Diphenyl-1,3,5-triazin-2-yl)-5-hexyloxyphenol, 2-[4,6-Bis(2,4-dimethylphenyl)-1,3,5-triazin-2-yl]-5-(octyloxy)phenol, oder eine Kombination davon umfasst.

7. Zusammensetzung nach Anspruch 5 oder 6, wobei das Anti-UV-Mittel weiterhin (3'-4'-Epoxycyclohexan)methyl-3'-4'-Epoxycyclohexylcarboxylat umfasst.

8. Zusammensetzung nach Anspruch 5-7, wobei das Flammschutzmittel 40 bis 60 Gewichtsprozent Bisphenol A-bis(diphenylphosphat), 20 bis 30 Gewichtsprozent Melaminpolyphosphat und 20 bis 30 Gewichtsprozent Aluminiumdiethylphosphinat, bezogen auf Gesamtgewichtsprozent des verwendeten Flammschutzmittels, umfasst.

9. Zusammensetzung nach Anspruch 1, umfassend:
(a) 15 bis 30 Gewichtsprozent eines Poly(2,6-dimethyl-1,4-phenylenether)s mit einer intrinsischen Viskosität bzw. Strukturviskosität von 0,3 bis 0,6 Deziliter pro Gramm gemessen in Chloroform bei 25 °C;
(b) 30 bis 45 Gewichtsprozent einer Kombination von zwei oder mehr hydrierten Block-Copolymeren einer alkenylaromatischen Verbindung und eines konjugierten Diens;
(c) 5 bis 10 Gewichtsprozent eines Polybutens;
(d) 2 bis 10 Gewichtsprozent Bisphenol A-bis(diphenylphosphat);
(e) 2 bis 10 Gewichtsprozent Melaminpolyphosphat;
(f) 5 bis 20 Gewichtsprozent Aluminiumdiethylphospinat;
(g) 0,1 bis 10 Gewichtsprozent eines Anti-UV-Mittels, wobei das Mittel 2-(4,6-Diphenyl-1,3,5-triazin-2-yl)-5-hexyloxyphenol umfasst;
(h) 5 bis 10 Gewichtsprozent eines Polypropylen-Homopolymers; und
(i) 4 bis 20 Gewichtsprozent Titandioxid.

10. Zusammensetzung nach Anspruch 1, umfassend:
(a) 15 bis 35 Gewichtsprozent eines Poly(phenylenether)s;
(b) 5 bis 30 Gewichtsprozent eines hydrierten Block-Copolymers einer alkenylaromatischen Verbindung und eines konjugierten Diens;
(c) 2 bis 20 Gewichtsprozent eines Polybutens;
(d) 15 bis 50 Gewichtsprozent eines Magnesiumhydroxid-Flammschutzmittels;
(e) 0,1 bis 10 Gewichtsprozent eines Anti-UV-Mittels, wobei das Mittel Trisaryl-1,3,5-triazin umfasst; und
(f) 5 bis 40 Gewichtsprozent eines Copolymers von Ethylen und einem C₃-C₁₂-Alpha-Olefin,
wobei ein aus der Zusammensetzung hergestellter Gegenstand eine CIELAB-Farbverschiebung (ΔE) von 5 oder weniger nach 300-stündiger Belichtung mit einer Xenon-Bogenlampe gemäß ASTM D 4459 zeigt.

11. Zusammensetzung nach Anspruch 10, wobei das Flammschutzmittel ein gecoatetes bzw. beschichtetes Magnesiumhydroxid umfasst.

12. Zusammensetzung nach Anspruch 11, wobei das Magnesiumhydroxid mit einem Aminosilan gecoated bzw. beschichtet ist.

13. Zusammensetzung nach irgendeinem der Ansprüche 9 bis 12, wobei das Polybuten ein Isobuten-Buten-Copolymer mit einem zahlengemittelten Molekulargewicht von etwa 800 atomaren Masseneinheiten ist.

14. Polymerzusammensetzung nach Anspruch 1, umfassend:
(a) 10 bis 45 Gewichtsprozent eines Poly(phenylenether)s;
(b) 5 bis 65 Gewichtsprozent eines hydrierten Block-Copolymers einer alkenylaromatischen Verbindung und eines konjugierten Diens;
(c) 0 bis 20 Gewichtsprozent eines Polybutens;
(d) 2 bis 60 Gewichtsprozent eines Flammschutzmittels;
(e) 0,1 bis 20 Gewichtsprozent eines Anti-UV-Mittels, wobei das Mittel ein Trisaryl-1,3,5-triazin mit:
(i) einem cycloaliphatischen Epoxy oder Poly(4-hydroxy-2,2,6,6-tetramethyl-1-piperidinethanol-alt-1,4-butandisäure); oder
(ii) einer Kombination von einem cycloaliphatischen Epoxy und Poly(4-hydroxy-2,2,6,6-tetramethyl-1-piperidinethanol-alt-1,4-butandisäure) umfasst;
(f) o bis 50 Gewichtsprozent eines Copolymers von Ethylen und einem C₃-C₁₂-Alpha-Olefin; und
(g) o bis 30 Gewichtsprozent eines Polyolefin-Homopolymers,
wobei die Polymerzusammensetzung nicht einen UV-Absorber vom Benzotriazol-Typ enthält, wobei alle Gewichtsprozentangaben auf das Gesamtgewicht der Zusammensetzung bezogen sind, und wobei ein aus der Zusammensetzung hergestellter Gegenstand:
(i) im Wesentlichen nicht verfärbt bzw. nichtrostend ist;
(ii) eine CIELAB-Farbverschiebung (ΔE) von 3 oder weniger nach 168-stündiger Wärmeeinwirkung bei 75 °C zeigt; und
(iii) eine CIELAB-Farbverschiebung (ΔE) von 12 oder weniger nach 300-stündiger Belichtung mit einer Xenon-Bogenlampe gemäß ASTM D 4459 zeigt.

15. Extrusionsbeschichteter Gegenstand, umfassend die Zusammensetzung nach irgendeinem der Ansprüche 1 bis 14.

## Revendications

1. Composition polymère, comprenant :
(a) 10 à 45 pourcents en poids d'un poly(phénylène éther) ;
(b) 5 à 65 pourcents en poids d'un copolymère à blocs hydrogénés d'un composé alcénylaromatique et d'un diène conjugué ;
(c) 0 à 20 pourcents en poids d'un polybutène ;
(d) 2 à 60 pourcents en poids d'un retardateur de flamme ;
(e) 0,1 à 20 pourcents en poids d'un agent anti-UV, l'agent comprenant une trisaryl-1,3,5-triazine ;
(f) 0 à 50 pourcents en poids d'un copolymère d'éthylène et d'une alpha-oléfine en C₃-C₁₂ ; et
(g) 0 à 30 pourcents en poids d'un homopolymère de polyoléfine ;
la composition polymère ne contenant pas d'absorbant UV de type benzotriazole,
dans laquelle tous les pourcentages en poids sont rapportés au poids total de la composition, et
un article fabriqué à partir de la composition :
(i) ne présentant sensiblement aucune altération, l'altération étant évaluée par utilisation du "Copper Penny Test" (essai à la pièce de cuivre), dans lequel une pièce de cuivre (copper penny) des Etats-Unis est serrée sur une éprouvette en la composition, l'éprouvette est placée dans un four à 60 °C, à 90 pourcents d'humidité relative (HR) pendant 72 heures, la surface de l'éprouvette qui est en contact avec la pièce fait l'objet d'un contrôle de son altération d'aspect, l'altération est notée sur une échelle de 1 à 5 (1 = aucune altération, 5 = altération très remarquable), et la composition présente une note d'altération de 1 ou 2, une note de "1" désignant l'absence d'altération et une note de "2" désignant une "absence presque complète d'altération" ;
(ii) présentant un écart de couleur CIELAB (ΔE) de 3 ou moins après 168 heures d'exposition à la chaleur à 75 °C ; et
(iii) présentant un écart de couleur CIELAB (ΔE) de 12 ou moins après 300 heures d'exposition à un arc au xénon selon ASTM D 4459.

2. Composition selon la revendication 1, dans laquelle l'agent anti-UV comprend une trisaryl-1,3,5-triazine, avec (i) un photostabilisant de type époxy cycloaliphatique ou amine à empêchement stérique ; ou (ii) une combinaison d'un photostabilisant de type époxy cycloaliphatique et de type amine à empêchement stérique.

3. Composition selon la revendication 1 ou 2, dans laquelle la trisaryl-1,3,5-triazine comprend le 2-(4,6-diphényl-1,3,5-triazin-2-yl)-5-hexyloxy-phénol, le 2-[4,6-bis(2,4-diméthyl-phényl)-1,3,5-triazin-2-yl]-5-(octyloxy)phénol, ou une combinaison de ceux-ci.

4. Composition selon la revendication 1 ou 3, dans laquelle l'agent anti-UV comprend en outre un stabilisant UV de type époxy cycloaliphatique.

5. Composition selon la revendication 1, comprenant :
(a) 15 à 35 pourcents en poids d'un poly(phénylène éther) ;
(b) 30 à 50 pourcents en poids d'une combinaison de deux polymères à blocs hydrogénés, ou plus, d'un composé alcénylaromatique et d'un diène conjugué ;
(c) 2 à 20 pourcents en poids d'un copolymère de polybutène ;
(d) 15 à 40 pourcents en poids d'un retardateur de flamme comprenant un polyphosphate de mélamine et un dialkylphosphinate métallique ;
(e) 0,1 à 20 pourcents en poids d'un agent anti-UV, l'agent comprenant une trisaryl-1,3,5-triazine ; et
(f) 2 à 20 pourcents en poids d'un homopolymère de polypropylène,
un article fabriqué à partir de la composition présentant un écart de couleur CIELAB (ΔE) de 5 ou moins après 300 heures d'exposition à un arc au xénon selon ASTM D 4459.

6. Composition selon la revendication 5, dans laquelle la trisaryl-1,3,5-triazine comprend le 2-(4,6-diphényl-1,3,5-triazin-2-yl)-5-hexyloxy-phénol, le 2-[4,6-bis(2,4-diméthyl-phényl)-1,3,5-triazin-2-yl]-5-(octyloxy)phénol, ou une combinaison de ceux-ci.

7. Composition selon la revendication 5 ou 6, dans laquelle l'agent anti-UV comprend en outre du (3',4'-époxycyclohexyl-carboxylate de (3',4'-époxycyclohexane) méthyle.

8. Composition selon les revendications 5 à 7, dans laquelle le retardateur de flamme comprend 40 à 60 pourcents en poids du bis(diphénylphosphate) du bisphénol A, 20 à 30 pourcents en poids de polyphosphate de mélamine et 20 à 30 pourcents en poids de diéthylphosphinate d'aluminium, par rapport au poids total du retardateur de flamme utilisé.

9. Composition selon la revendication 1, comprenant :
(a) 15 à 30 pourcents en poids d'un poly(2,6-diméthyl-1,4-phénylène éther) présentant une viscosité intrinsèque de 0,3 à 0,6 décilitre par gramme, mesurée dans le chloroforme à 25 °C ;
(b) 30 à 45 pourcents en poids d'une combinaison de deux copolymères à blocs hydrogénés, ou plus, d'un composé alcénylaromatique et d'un diène conjugué ;
(c) 5 à 10 pourcents en poids d'un polybutène ;
(d) 2 à 10 pourcents en poids du bis(diphényl phosphate) du bisphénol A ;
(e) 2 à 10 pourcents en poids de polyphosphate de mélamine ;
(f) 5 à 20 pourcents en poids de diéthylphosphinate d'aluminium ;
(g) 0,1 à 10 pourcents en poids d'un agent anti-UV, l'agent anti-UV comprenant du 2-(4,6-diphényl-1,3,5-triazin-2-yl)-5-hexyloxy-phénol ;
(h) 5 à 10 pourcents en poids d'un homopolymère de polypropylène ; et
(i) 4 à 20 pourcents en poids de dioxyde de titane.

10. Composition selon la revendication 1, comprenant :
(a) 15 à 35 pourcents en poids d'un poly(phénylène éther) ;
(b) 5 à 30 pourcents en poids d'un copolymère à blocs hydrogénés d'un composé alcénylaromatique et d'un diène conjugué ;
(c) 2 à 20 pourcents en poids d'un polybutène ;
(d) 15 à 50 pourcents en poids d'un retardateur de flamme de type hydroxyde de magnésium ;
(e) 0,1 à 10 pourcents en poids d'un agent anti-UV, l'agent comprenant de la trisaryl-1,3,5-triazine ; et
(f) 5 à 40 pourcents en poids d'un copolymère d'éthylène et d'une alpha-oléfine en C₃-C₁₂,
un article fabriqué à partir de la composition présentant un écart de couleur CIELAB (ΔE) de 5 ou moins après 300 heures d'exposition à un arc au xénon selon ASTM D 4459.

11. Composition selon la revendication 10, dans laquelle le retardateur de flamme comprend un hydroxyde de magnésium revêtu.

12. Composition selon la revendication 11, dans laquelle l'hydroxyde d'aluminium est revêtu d'un aminosilane.

13. Composition selon l'une quelconque des revendications 9 à 12, dans laquelle le polybutène est un copolymère isobutène-butène présentant une masse moléculaire moyenne en nombre d'environ 800 unités de masse atomique.

14. Composition polymère selon la revendication 1, comprenant :
(a) 10 à 45 pourcents en poids d'un poly(phénylène éther) ;
(b) 5 à 65 pourcents en poids d'un copolymère à blocs hydrogénés d'un composé alcénylaromatique et d'un diène conjugué ;
(c) 0 à 20 pourcents en poids d'un polybutène ;
(d) 2 à 60 pourcents en poids d'un retardateur de flamme ;
(e) 0,1 à 20 pourcents en poids d'un agent anti-UV, ledit agent comprenant une trisaryl-1,3,5-triazine, avec :
(i) un époxy cycloaliphatique ou un poly(4-hydroxy-2,2,6,6-tétraméthyl-1-pipéridine éthanol-alt-1,4-acide butanedioïque) ; ou
(ii) une combinaison d'un époxy cycloaliphatique et d'un poly(4-hydroxy-2,2,6,6-tétraméthyl-1-pipéridine éthano-alt-1,4-acide butanedioïque) ;
(f) 0 à 50 pourcents en poids d'un copolymère d'éthylène et d'une alpha-oléfine en C₃-C₁₂ ; et
(g) 0 à 30 pourcents en poids d'un homopolymère de polyoléfine,
ladite composition polymère ne contenant pas d'absorbant UV de type benzotriazole,
dans laquelle tous les pourcentages en poids sont rapportés au poids total de la composition, et
un article fabriqué à partir de la composition :
(i) ne présentant pratiquement aucune altération ;
(ii) présentant un écart de couleur CIELAB (ΔE) de 3 ou moins après 168 heures d'exposition à la chaleur à 75 °C ; et
(iii) présentant un écart de couleur CIELAB (ΔE) de 12 ou moins après 300 heures d'exposition à un arc au xénon selon ASTM D 4459.

15. Article revêtu par extrusion comprenant la composition selon l'une quelconque des revendications 1 à 14.
